# EUROPEAN PATENT APPLICATION

(11) **EP 4 336 766 A1**
(43) Date of publication of application: **13.03.2024**
(21) Application number: 22831954.7
(22) Date of filing: 27.06.2022
(51) Int. Cl.: H04L 5/00

(54) **METHOD AND APPARATUS FOR TRANSMITTING CONTROL INFORMATION**

(30) Priority: 30.06.2021 CN 202110740654
(71) Applicant: Huawei Technologies Co., Ltd., Longgang Shenzhen, Guangdong 518129 (CN)
(72) Inventor: WANG, Ting, Shenzhen, Guangdong 518129 (CN); LYU, Yongxia, Shenzhen, Guangdong 518129 (CN); WANG, Jun, Shenzhen, Guangdong 518129 (CN); ZHANG, Liqing, Shenzhen, Guangdong 518129 (CN); MA, Jianglei, Shenzhen, Guangdong 518129 (CN)
(74) Representative: Epping - Hermann - Fischer
(86) International application number: PCT/CN2022/101478
(87) International publication number: WO 2023/274140

(57) **Abstract**

Embodiments of this application provide a control information transmission method and apparatus, to improve spectral efficiency in a communication system and reduce an information transmission latency. Specifically, the control information transmission method includes: A first terminal device receives first group control information. The first group control information includes P1 information blocks, and P1 is an integer greater than or equal to 1. The first terminal device determines, based on first identification information in the first group control information, an information block corresponding to the first communication apparatus. The information block corresponding to the first communication apparatus includes first control information of the first communication apparatus, and the first control information is used by the first communication apparatus to perform channel estimation on a first channel. The first terminal device receives second control information. The second control information is used by the first communication apparatus to determine information for sending feedback information corresponding to the first channel.

## Description

This application claims priority to Chinese Patent Application No. 202110740654.8, filed with China National Intellectual Property Administration on June 30, 2021 and entitled "CONTROL INFORMATION TRANSMISSION METHOD AND APPARATUS", which is incorporated herein by reference in its entirety.

### TECHNICAL FIELD

Embodiments of this application relate to the communication field, and more specifically, to a control information transmission method and apparatus.

### BACKGROUND

In a high-reliable low-latency communication scenario, a very low latency and very high communication-service availability and reliability need to be supported. For example, in an industrial manufacturing scenario, there is also a specific requirement for a low latency and high reliability of communication. For example, in the high-end manufacturing industry, there is a very high demand for a latency and stability of workshop equipment. However, in a common 5th generation (5th Generation, 5G) communication technology such as new radio (New Radio, NR), spectral efficiency is low, a requirement for a communication latency and reliability in the high-end manufacturing industry cannot be satisfied, and a communication demand in a case of a large quantity of users cannot be satisfied.

### SUMMARY

Embodiments of this application provide a control information transmission method and apparatus, to improve spectral efficiency in a communication system and reduce an information transmission latency.

According to a first aspect, a control information transmission method is provided. The method includes: A first communication apparatus receives first group control information. The first group control information includes P1 information blocks, and P1 is an integer greater than or equal to 1. The first communication apparatus determines, based on first identification information in the first group control information, an information block corresponding to the first communication apparatus. The information block corresponding to the first communication apparatus is L information blocks in the P1 information blocks. L is an integer greater than or equal to 1, and L is less than or equal to P1. The information block corresponding to the first communication apparatus includes first control information of the first communication apparatus, and the first control information is used by the first communication apparatus to perform channel estimation on a first channel. The first communication apparatus receives second control information. The second control information is used by the first communication apparatus to determine information for sending feedback information corresponding to the first channel.

A plurality of pieces of control information are aggregated into one piece of group control information, and when the plurality of pieces of control information are simultaneously transmitted by using the group control information, there is no need to add a check bit to each piece of control information, so that overheads of the control information are reduced, and spectral efficiency is improved. Therefore, communication efficiency is improved. In addition, the group control information includes the first identification information, so that a terminal device can be dynamically grouped, more flexible transmission of the group control information is implemented, and the terminal device is dynamically scheduled. In addition, different types of control information are separately transmitted, so that a terminal device can process the different types of information in parallel. Therefore, a communication latency can be reduced, and communication performance is improved.

With reference to the first aspect, in some implementations of the first aspect, the method further includes: The first communication apparatus receives third group control information. The third group control information includes P2 information blocks. P2 is an integer greater than or equal to 1. The P2 information blocks include third control information of the first communication apparatus. The third control information is used by the first communication apparatus to decode the first channel.

The three types of control information used for channel estimation, decoding the first channel, and determining the information for sending the feedback information corresponding to the first channel are respectively transmitted, so that the terminal device can further process different types of information in parallel. Therefore, a latency of the terminal device is further reduced, and communication performance is improved.

With reference to the first aspect, in some implementations of the first aspect, there is a correspondence between a position of the first control information of the first communication apparatus in the first group control information and a position of the third control information of the first communication apparatus in the third group control information.

A structure of the first group control information and a structure of the third group control information are associated, so that blind detection complexity of the terminal device can be reduced, the latency is reduced, and the communication performance is improved.

With reference to the first aspect, in some implementations of the first aspect, the method further includes: The first communication apparatus determines, based on the first identification information in the first group control information, the information block that corresponds to the first communication apparatus and that is in the third group control information. Optionally, the third group control information does not include identification information.

The first communication apparatus determines the corresponding information block in the third group control information based on the first identification information in the first group control information, so that an operation of the first communication apparatus is faster. In addition, when the third group control information does not include the identification information, a quantity of bits included in the third group control information is reduced, thereby saving a resource and improving communication efficiency.

With reference to the first aspect, in some implementations of the first aspect, L=1. The L information blocks include M₁ pieces of control information. The M₁ pieces of control information are control information of M₁ carriers of the first communication apparatus. M₁ is an integer greater than or equal to 1.

In the foregoing manner, when M₁ is an integer greater than 1, one piece of group control information schedules communication on a plurality of carriers of one terminal device, so that multi-carrier communication of the terminal device can be implemented, a latency is reduced, and communication performance is improved.

With reference to the first aspect, in some implementations of the first aspect, the first identification information indicates one or more terminal devices scheduled by the first group control information.

In the foregoing manner, the first identification information in the group control information may schedule one or more terminal devices, so that flexible communication and dynamic scheduling of a plurality of terminal devices can be implemented, a service requirement of each terminal is satisfied, a latency is reduced, and communication performance is improved.

With reference to the first aspect, in some implementations of the first aspect, the method further includes: The first communication apparatus receives first configuration information. The first configuration information includes a second identifier corresponding to the first communication apparatus. The first communication apparatus determines, based on the first identification information and the second identifier, the information block corresponding to the first communication apparatus.

With reference to the first aspect, in some implementations of the first aspect, the information block corresponding to the first communication apparatus includes carrier identifier indication information. The carrier identifier indication information indicates the M₁ carriers in N carriers of the first communication apparatus. N is an integer greater than or equal to M₁.

In the foregoing manner, the information block includes the carrier identifier indication information, so that one information block can schedule communication on one or more carriers. Flexible multi-carrier communication can be implemented, and a carrier is dynamically scheduled, thereby satisfying a service requirement of a terminal, reducing a latency, and improving communication performance.

With reference to the first aspect, in some implementations of the first aspect, L=M₂. The information block corresponding to the first communication apparatus is M₂ information blocks. The M₂ information blocks are information blocks corresponding to M₂ carriers of the first communication apparatus. M₂ is an integer greater than or equal to 1, and M₂ is less than or equal to P₁.

In the foregoing manner, one piece of group control information schedules communication on a plurality of carriers of one terminal device, so that multi-carrier communication of the terminal device can be implemented, a latency is reduced, and communication performance is improved. With reference to the first aspect, in some implementations of the first aspect, the first identification information indicates one or more carriers scheduled by the first group control information. The one or more carriers correspond to a same terminal device or different terminal devices.

In the foregoing manner, one piece of group control information may schedule communication on a plurality of carriers of a plurality of terminal devices, so that multi-carrier communication of the plurality of terminal devices can be implemented, a latency is reduced, and communication performance is improved.

With reference to the first aspect, in some implementations of the first aspect, the method further includes: The first communication apparatus receives second configuration information. The second configuration information includes a third identifier corresponding to a first carrier of the first communication apparatus. The first communication apparatus determines, based on the first identification information and the third identifier, an information block corresponding to the first carrier of the first communication apparatus.

With reference to the first aspect, in some implementations of the first aspect, the first identification information is before the P₁ information blocks, or the first identification information is in at least one of the P₁ information blocks.

With reference to the first aspect, in some implementations of the first aspect, when the first identification information is in at least one of the P₁ information blocks, the method further includes: The first communication apparatus receives third configuration information. The third configuration information indicates information about a position of an information block corresponding to a first communication apparatus group in the information blocks of the first group control information. The first communication apparatus group includes at least one terminal device. The first communication apparatus belongs to the first communication apparatus group.

With reference to the first aspect, in some implementations of the first aspect, the information about the position of the information block includes at least one of the following: an identifier of the information block, a start bit position of the information block, and a bit length of the information block.

With reference to the first aspect, in some implementations of the first aspect, the first group control information further includes indication information. The indication information indicates that the first group control information is group control information.

The first group control information includes the indication information indicating that the control information is the group control information, so that the first communication apparatus may blindly detect only a status of the group control information based on the indication information, that is, blindly detect only one case. Therefore, the blind detection complexity of the terminal device can be reduced, the latency is reduced, and the communication performance is improved. With reference to the first aspect, in some implementations of the first aspect, the first control information includes at least one of the following: time domain resource allocation information, frequency domain resource allocation information, antenna port information, layer quantity information, and information about a sequence of a demodulation reference signal.

With reference to the first aspect, in some implementations of the first aspect, the second control information includes at least one of the following: indication information of a physical uplink control channel PUCCH resource, transmit power command information, channel state information CSI request information, sounding reference signal SRS request information, and coding block group configuration information.

With reference to the first aspect, in some implementations of the first aspect, that the first communication apparatus receives second control information includes: The first communication apparatus receives the second control information on a physical downlink shared channel PDSCH. Optionally, the first communication apparatus receives the second control information on a PDSCH on a primary carrier or a carrier with a smallest carrier identifier.

With reference to the first aspect, in some implementations of the first aspect, the third control information includes at least one of the following: modulation and coding scheme MCS information, HARQ process number information, redundancy version information, and new data indicator information.

With reference to the first aspect, in some implementations of the first aspect, a quantity of bits of the third group control information is determined based on the first identification information included in the first group control information.

The quantity of bits of the third group control information is determined based on the first identification information included in the first group control information, so that the quantity of bits of the third group control information can be determined based on a status of actually scheduled control information. In comparison with that the quantity of bits of the third group control information is a predefined value or a fixed value indicated by signaling, resource overheads of the third group control information can be reduced, and the communication efficiency and the communication performance are improved.

With reference to the first aspect, in some implementations of the first aspect, there is a correspondence between a control channel element CCE number of a CCE corresponding to the first group control information and a control channel element CCE number of a CCE corresponding to the third group control information, and/or a CCE aggregation level corresponding to the first group control information is the same as a CCE aggregation level corresponding to the third group control information.

The CCE of the first group control information and the CCE of the third group control information are associated, so that the blind detection complexity of the terminal device can be reduced, the latency is reduced, and the communication performance is improved.

According to a second aspect, a control information transmission method is provided. The method includes: A second communication apparatus determines first group control information and second control information. The second communication apparatus sends the first group control information. The first group control information includes P1 information blocks, and P1 is an integer greater than or equal to 1. The first group control information includes first identification information. The first identification information is for determining an information block corresponding to one or more terminal devices. An information block corresponding to a first communication apparatus in the one or more terminal devices is L information blocks in the P1 information blocks. L is an integer greater than or equal to 1, and L is less than or equal to P1. The information block corresponding to the first communication apparatus includes first control information of the first communication apparatus. The first control information is for channel estimation on a first channel of the first communication apparatus. The second communication apparatus sends the second control information. The second control information is for determining information for sending feedback information corresponding to the first channel.

A plurality of pieces of control information are aggregated into one piece of group control information, and the group control information is transmitted, so that when the plurality of pieces of control information are simultaneously transmitted, only one CRC bit for blind detection needs to be added. Overheads of the control information are reduced, and spectral efficiency is improved. Therefore, communication efficiency is improved. In addition, the group control information includes the first identification information, so that a terminal device can be dynamically grouped, more flexible transmission of the group control information is implemented, and the terminal device is dynamically scheduled. In addition, different types of control information are separately transmitted, so that a terminal device can process the different types of information in parallel. Therefore, a communication latency can be reduced, and communication performance is improved. With reference to the second aspect, in some implementations of the second aspect, the method further includes: The second communication apparatus receives the feedback information corresponding to the first channel.

With reference to the second aspect, in some implementations of the second aspect, the method further includes: The second communication apparatus sends third group control information. The third group control information includes P₂ information blocks. P₂ is an integer greater than or equal to 1. The P₂ information blocks include third control information of the first communication apparatus. The third control information is for decoding the first channel.

The three types of control information used for channel estimation, decoding the first channel, and determining the information for sending the feedback information corresponding to the first channel are respectively transmitted, so that the terminal device can further process different types of information in parallel. Therefore, a latency of the terminal device is further reduced, and communication performance is improved.

With reference to the second aspect, in some implementations of the second aspect, there is a correspondence between a position of the first control information of the first communication apparatus in the first group control information and a position of the third control information of the first communication apparatus in the third group control information.

A structure of the first group control information and a structure of the third group control information are associated, so that blind detection complexity of the terminal device can be reduced, the latency is reduced, and the communication performance is improved.

With reference to the second aspect, in some implementations of the second aspect, L=1. The L information blocks include M₁ pieces of control information. The M₁ pieces of control information are control information of M₁ carriers of the first communication apparatus. M₁ is an integer greater than or equal to 1.

With reference to the second aspect, in some implementations of the second aspect, the first identification information indicates the one or more terminal devices scheduled by the first group control information.

With reference to the second aspect, in some implementations of the second aspect, the method further includes: The second communication apparatus sends first configuration information. The first configuration information includes a second identifier corresponding to the first communication apparatus. The second identifier is for determining the information block corresponding to the first communication apparatus.

With reference to the second aspect, in some implementations of the second aspect, the information block corresponding to the first communication apparatus includes carrier identifier indication information. The carrier identifier indication information indicates the M₁ carriers in N carriers of the first communication apparatus. N is an integer greater than or equal to M₁.

With reference to the second aspect, in some implementations of the second aspect, L=M₂. The information block corresponding to the first communication apparatus is M₂ information blocks. The M₂ information blocks are information blocks corresponding to M₂ carriers of the first communication apparatus. M₂ is an integer greater than or equal to 1, and M₂ is less than or equal to P₁.

With reference to the second aspect, in some implementations of the second aspect, the first identification information indicates one or more carriers scheduled by the first group control information. The one or more carriers correspond to a same terminal device or different terminal devices.

With reference to the second aspect, in some implementations of the second aspect, the method further includes: The second communication apparatus sends second configuration information. The second configuration information includes a third identifier corresponding to a first carrier of the first communication apparatus. The third identifier is for determining an information block corresponding to the first carrier of the first communication apparatus.

With reference to the second aspect, in some implementations of the second aspect, the first identification information is before the P₁ information blocks, or the first identification information is in at least one of the P₁ information blocks.

With reference to the second aspect, in some implementations of the second aspect, when the first identification information is in at least one of the P₁ information blocks, the method further includes: The second communication apparatus sends third configuration information. The third configuration information indicates information about a position of an information block corresponding to a first communication apparatus group in the information blocks of the first group control information. The first communication apparatus group includes at least one terminal device. The first communication apparatus belongs to the first communication apparatus group.

With reference to the second aspect, in some implementations of the second aspect, the information about the position of the information block includes at least one of the following: an identifier of the information block, a start bit position of the information block, and a bit length of the information block.

With reference to the second aspect, in some implementations of the second aspect, the first group control information further includes indication information. The indication information indicates that the first group control information is group control information.

The first group control information includes the indication information indicating that the control information is the group control information, so that the first communication apparatus may blindly detect only a status of the group control information based on the indication information, that is, blindly detect only one case. Therefore, the blind detection complexity of the terminal device can be reduced, the latency is reduced, and the communication performance is improved. With reference to the second aspect, in some implementations of the second aspect, the first control information includes at least one of the following: time domain resource allocation information, frequency domain resource allocation information, antenna port information, layer quantity information, and information about a sequence of a demodulation reference signal.

With reference to the second aspect, in some implementations of the second aspect, the second control information includes at least one of the following: indication information of a physical uplink control channel PUCCH resource, transmit power command information, channel state information CSI request information, sounding reference signal SRS request information, and coding block group configuration information.

With reference to the second aspect, in some implementations of the second aspect, that the second communication apparatus sends the second control information includes: The second communication apparatus sends the second control information on a physical downlink shared channel PDSCH on a primary carrier of the first communication apparatus or a carrier with a smallest carrier identifier.

With reference to the second aspect, in some implementations of the second aspect, the third control information includes at least one of the following: modulation and coding scheme MCS information, HARQ process number information, redundancy version information, and new data indicator information.

With reference to the second aspect, in some implementations of the second aspect, a quantity of bits of the third group control information is determined based on the first identification information included in the first group control information.

The quantity of bits of the third group control information is determined based on the first identification information included in the first group control information, so that the quantity of bits of the third group control information can be determined based on a status of actually scheduled control information. In comparison with that the quantity of bits of the third group control information is a predefined value or a fixed value indicated by signaling, resource overheads of the third group control information can be reduced, and the communication efficiency and the communication performance are improved.

With reference to the second aspect, in some implementations of the second aspect, there is a correspondence between a control channel element CCE number of a CCE corresponding to the first group control information and a control channel element CCE number of a CCE corresponding to the third group control information, and/or a CCE aggregation level corresponding to the first group control information is the same as a CCE aggregation level corresponding to the third group control information.

According to a third aspect, a control information transmission apparatus is provided. The apparatus has a function of implementing behavior in the method instance in the first aspect. The function may be implemented by hardware, or may be implemented by hardware executing corresponding software. The hardware or the software includes one or more modules corresponding to the foregoing function. In a possible design, the apparatus includes a transceiver unit and a processing unit. The transceiver unit is configured to receive first group control information. The first group control information includes P₁ information blocks, and P₁ is an integer greater than or equal to 1. The processing unit is configured to determine, based on first identification information in the first group control information, an information block corresponding to the first communication apparatus. The information block corresponding to the first communication apparatus is L information blocks in the P₁ information blocks. L is an integer greater than or equal to 1, and L is less than or equal to P1. The information block corresponding to the first communication apparatus includes first control information of the first communication apparatus. The first control information is used by the first communication apparatus to perform channel estimation on a first channel. The transceiver unit is further configured to receive second control information. The second control information is used by the first communication apparatus to determine information for sending feedback information corresponding to the first channel. The foregoing modules may perform corresponding functions in the method example in the first aspect. For details, refer to detailed descriptions in the method example. Details are not described herein again.

According to a fourth aspect, a control information transmission apparatus is provided. The apparatus has a function of implementing behavior in the method instance in the second aspect. The function may be implemented by hardware, or may be implemented by hardware executing corresponding software. The hardware or the software includes one or more modules corresponding to the foregoing function. In a possible design, the apparatus includes a processing unit and a transceiver unit. The processing unit is configured to determine first group control information and second control information. The transceiver unit is configured to send the first group control information. The first group control information includes P₁ information blocks, and P₁ is an integer greater than or equal to 1. The first group control information includes first identification information. The first identification information is for determining an information block corresponding to one or more terminal devices. An information block corresponding to a first communication apparatus in the one or more terminal devices is L information blocks in the P₁ information blocks. L is an integer greater than or equal to 1, and L is less than or equal to P₁. The information block corresponding to the first communication apparatus includes first control information of the first communication apparatus. The first control information is for channel estimation on a first channel of the first communication apparatus. The transceiver unit is further configured to send the second control information. The second control information is for determining information for sending feedback information corresponding to the first channel. The foregoing modules may perform corresponding functions in the method example in the second aspect. For details, refer to detailed descriptions in the method example. Details are not described herein again.

According to a fifth aspect, a communication apparatus is provided. The communication apparatus may be the terminal device in the foregoing method embodiments, or may be a chip disposed in the terminal device. The communication apparatus includes a processor and an interface circuit, and optionally, further includes a memory. The memory is configured to store a computer program or instructions. The processor is coupled to the memory and the interface circuit. When the processor executes the computer program or the instructions, the communication apparatus is enabled to perform the method performed by the terminal device in the foregoing method embodiments.

According to a sixth aspect, a communication apparatus is provided. The communication apparatus may be the second communication apparatus in the foregoing method embodiments, or may be a chip disposed in the second communication apparatus. The communication apparatus includes a processor and an interface circuit, and optionally, further includes a memory. The memory is configured to store a computer program or instructions. The processor is coupled to the memory and the interface circuit. When the processor executes the computer program or the instructions, the communication apparatus is enabled to perform the method performed by the second communication apparatus in the foregoing method embodiments.

According to a seventh aspect, a computer program product is provided. The computer program product includes a computer program or instructions. When the computer program or the instructions are run on a computer, the method performed by the terminal device in the foregoing aspects is performed.

According to an eighth aspect, a computer program product is provided. The computer program product includes a computer program or instructions. When the computer program or the instructions are run on a computer, the method performed by the second communication apparatus in the foregoing aspects is performed.

According to a ninth aspect, this application provides a chip system. The chip system includes a processor, configured to implement a function of the terminal device in the methods in the foregoing aspects. In a possible design, the chip system further includes a memory, configured to store program instructions and/or data. The chip system may include a chip, or may include a chip and another discrete component.

According to a tenth aspect, this application provides a chip system. The chip system includes a processor, configured to implement a function of the second communication apparatus in the methods in the foregoing aspects. In a possible design, the chip system further includes a memory, configured to store program instructions and/or data. The chip system may include a chip, or may include a chip and another discrete component.

According to an eleventh aspect, this application provides a computer-readable storage medium. The computer-readable storage medium stores a computer program. When the computer program is run, the method performed by the terminal device in the foregoing aspects is implemented. According to a twelfth aspect, this application provides a computer-readable storage medium. The computer-readable storage medium stores a computer program. When the computer program is run, the method performed by the second communication apparatus in the foregoing aspects is implemented.

According to a thirteenth aspect, a communication system is provided. The communication system includes the second communication apparatus and the terminal device in any one of the foregoing aspects.

### BRIEF DESCRIPTION OF DRAWINGS

FIG. 1 is a schematic diagram of a communication system to which an embodiment of this application is applicable;
FIG. 2 is another schematic diagram of a communication system to which an embodiment of this application is applicable;
FIG. 3 is another schematic diagram of a communication system to which an embodiment of this application is applicable;
FIG. 4 is another schematic diagram of a communication system to which an embodiment of this application is applicable;
FIG. 5 is a flowchart of parallel processing of a terminal device when downlink control information is transmitted in parts according to an embodiment of this application;
FIG. 6 is a schematic flowchart of a control information transmission method according to an embodiment of this application;
FIG. 7 is a schematic diagram of an example structure of first group control information according to an embodiment of this application;
FIG. 8 is a schematic diagram of another example structure of first group control information according to an embodiment of this application;
FIG. 9 is a schematic diagram of another example structure of first group control information according to an embodiment of this application;
FIG. 10 is a schematic diagram of another example structure of first group control information according to an embodiment of this application;
FIG. 11 is a schematic diagram of another example structure of first group control information according to an embodiment of this application;
FIG. 12 is a schematic diagram of another example structure of first group control information according to an embodiment of this application;
FIG. 13 is a schematic diagram of another example structure of first group control information according to an embodiment of this application;
FIG. 14 is a schematic diagram of another example structure of first group control information according to an embodiment of this application;
FIG. 15 is a schematic diagram of another example structure of first group control information according to an embodiment of this application;
FIG. 16 is a schematic diagram of another example structure of first group control information according to an embodiment of this application;
FIG. 17 is a schematic diagram of an example structure of an information field included in single control information and group control information according to an embodiment of this application;
FIG. 18 is a schematic diagram of a structure of an apparatus according to an embodiment of this application;
FIG. 19 is a schematic diagram of a structure of another apparatus according to an embodiment of this application;
FIG. 20 is a schematic diagram of a structure of a communication apparatus according to an embodiment of this application;
FIG. 21 is a schematic diagram of a structure of a network device according to an embodiment of this application; and
FIG. 22 is a schematic diagram of a structure of a terminal device according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a 5th generation (5th Generation, 5G) system such as a long term evolution (Long Term Evolution, LTE) system, an LTE frequency division duplex (Frequency Division Duplex, FDD) system, LTE time division duplex (Time Division Duplex, TDD), and new radio (New Radio, NR), and a 6th generation (6th generation, 6G) mobile information technology system, or may be applied to a subsequent evolved standard, for example, a future communication system or another communication system. This is not limited in this application.

In addition, a method in this application may be applied to a vehicle-to-everything (vehicle-to-everything, V2X) system, or may be applied to a system in hybrid networking of 4G and 5G, or a device-to-device (device-to-device, D2D) communication system, a machine to machine (machine to machine, M2M) communication system, an internet of things (Internet of Things, IoT), a frequency division duplex (frequency division duplex, FDD) system, a time division duplex (time division duplex, TDD) system, a satellite communication system, a wireless fidelity (wireless fidelity, Wi-Fi) system, and another next-generation communication system, or a non-3GPP communication systems. This is not limited.

A communication method provided in embodiments of this application may be applied to various communication scenarios, for example, may be applied to one or more of the following communication scenarios: an enhanced mobile broadband (enhanced mobile broadband, eMBB), ultra-reliable low-latency communication (ultra-reliable low-latency communication, URLLC), machine type communication (machine type communication, MTC), an internet of things (internet of things, IoT), a narrowband internet of things (narrowband internet of thing, NB-IoT), customer-premises equipment (customer-premise equipment, CPE), augmented reality (augmented reality, AR), virtual reality (virtual reality, VR), and massive machine-type communications (massive machine-type communication, mMTC), device-to-device (device-to-device, D2D), vehicle-to-everything (vehicle-to-everything, V2X), vehicle-to-vehicle (vehicle-to-vehicle, V2V), and the like.

It should be noted that, in embodiments of this application, the IoT may include one or more of an NB-IoT, MTC, mMTC, and the like. This is not limited.

Embodiments of this application are applicable to both a homogeneous network scenario and a heterogeneous network scenario, and are not limited to a transmission point. Coordinated multipoint transmission may be performed between macro base stations, between micro base stations, and between a macro base station and a micro base station. Embodiments of this application are applicable to a duplex system, an access and backhaul system, a relay system, and the like. Embodiments of this application are applicable to a low-frequency scenario (sub 6G), or a high-frequency scenario (above 6G), terahertz, optical communication, or the like.

A terminal device in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal device may alternatively be a palmtop computer, a mobile internet device (mobile internet device, MID), an eMBB terminal, a URLLC terminal, an MTC terminal, an NB-IoT terminal, a CPE terminal, a VR terminal, an AR terminal, a V2X terminal, a wireless terminal in industrial control, a wireless terminal in self driving, a wireless terminal in telemedicine, a wireless terminal in a smart grid, a wireless terminal in transportation security, a wireless terminal in a smart city (smart city), a wireless terminal in a smart home (smart home), a sensor, a cellular phone, a cordless phone, a session initiation protocol (SIP, session initiation protocol) phone, a wireless local loop (WLL, wireless local loop) station, a personal digital assistant (PDA, personal digital assistant), a computing device or another processing device connected to a wireless modem, a vehicle-mounted terminal, a vehicle with a vehicle-to-vehicle (vehicle-to-vehicle, V2V) capability, an uncrewed aerial vehicle (uncrewed aerial vehicle, UAV) with a capability of communicating with an uncrewed aerial vehicle, a handheld device with a wireless communication function, a wearable device, a terminal device in a 5G network, a terminal device in a future evolved public land mobile communication network (Public Land Mobile Network, PLMN), or the like. This is not limited in embodiments of this application.

In addition, the terminal device may alternatively include sensors such as an intelligent printer, a train detector, and a gas station, and main functions include collecting data, receiving control information and data of a network device, sending an electromagnetic wave, and transmitting data to the network device.

A network device in embodiments of this application may be a device configured to communicate with a terminal device. The network device may be an evolved NodeB (Evolved NodeB, eNB or eNodeB) in an LTE system, or may be a radio controller in a cloud radio access network (Cloud Radio Access Network, CRAN) scenario. Alternatively, the network device may be a relay station, an access point, a vehicle-mounted device, a wearable device, a network device in a 5G network, a network device in a future evolved network, a satellite base station, or the like. This is not limited in embodiments of this application. The network device may further include a node (for example, an xNodeB) in a 6G system, a device that may implement a base station function in the future, an access node in a Wi-Fi system, a transmission reception point (transmission reception point, TRP), a transmission point (transmission point, TP), a device that undertakes a base station function in device-to-device (Device-to-Device, D2D) communication, vehicle-to-everything (vehicle-to-everything, V2X) communication, or machine to machine (machine to machine, M2M) communication, and the like. This is not specifically limited herein. Alternatively, the network device may be a device that supports wired access, or may be a device that supports wireless access. For example, the network device may be an access network (access network, AN)/radio access network (radio access network, RAN) device, and includes a plurality of AN/RAN nodes. The AN/RAN node may be a transmission reception point (transmission reception point, TRP), an evolved NodeB (evolved NodeB, eNB), a radio network controller (radio network controller, RNC), a home base station (for example, a home evolved NodeB or a home NodeB, HNB), a wireless fidelity (wireless fidelity, Wi-Fi) access point (access point, AP), a wireless relay node, a wireless backhaul node, a transmission point (transmission point, TP), a transmission reception point (transmission reception point, TRP), or the like. Alternatively, the AN/RAN may be 5G, for example, an ngNB in an NR system, a transmission point (TRP or TP), or one or a group of antenna panels of a base station in a 5G system. Alternatively, the AN/RAN may be a network node that forms a next-generation base station (NR NodeB, gNB) or a transmission point, for example, a baseband unit (baseband unit, BBU), a distributed unit (distributed unit, DU), D2D, V2X, a device that undertakes a base station function in D2D communication, V2X communication, or machine to machine (machine to machine, M2M) communication, a base station in a future communication system, or another access node. It should be understood that the network device in embodiments of this application may be any one of the foregoing devices or a chip in the foregoing devices. This is not specifically limited herein. Regardless of serving as a device or a chip, the network device may be manufactured, sold, or used as an independent product. In embodiments and subsequent embodiments, only a network device is used as an example for description.

The communication method shown in embodiments of this application may be applied to communication between a first communication apparatus and a second communication apparatus. The first communication apparatus may be a terminal device or a network device. The second communication apparatus may be a terminal device or a network device. In the following embodiments, an example in which the first communication apparatus is a terminal device and the second communication apparatus is a network device is used for description. It should be noted that the communication method shown in embodiments of this application may be applied to communication between a terminal device and a network device, communication between terminal devices, or communication between network devices. The communication between network devices may be coordinated multipoint transmission between macro base stations, between micro base stations, and between a macro base station and a micro base station.

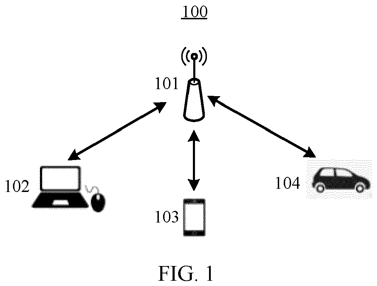

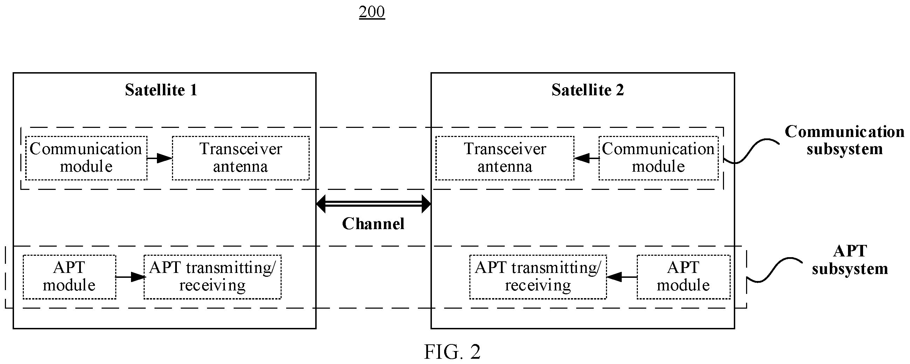

FIG. 1 is a schematic diagram of a communication system to which an embodiment of this application is applicable. FIG. 1 shows a cellular communication system 100 to which an embodiment of this application is applied. The cellular communication system 100 includes a network device 101 and terminal devices 102, 103, and 104. Information may be sent between the network device and the terminal device through a channel, and different channels may carry information of a same type and/or different types. The network device may send control information to the terminal device through a control channel, to schedule the terminal device. For example, the network device 101 is a network device in the foregoing possible implementations, and the terminal devices 102, 103, and 104 are terminals in the foregoing possible implementations. FIG. 2 is another schematic diagram of a communication system to which an embodiment of this application is applicable. FIG. 2 shows an inter-satellite link communication system 200 to which an embodiment of this application is applied. The inter-satellite link communication system 200 includes a satellite 1 and a satellite 2, and the satellite 1 and the satellite 2 exchange information through a channel, that is, communication between satellites. The satellite may serve as a network device, or may serve as a terminal device. Specifically, the communication system includes a communication subsystem and a capture, pointing, and tracking (acquisition pointing tracking, APT) subsystem. The communication subsystem is responsible for transmission of inter-satellite information, and is a main body of the inter-satellite communication system. The APT subsystem is responsible for capturing, aligning, and tracking between satellites. Capturing is to determine an arrival direction of an incident signal. Aligning is to adjust a direction of a transmit wave to aim at a receiving direction. Tracking is to continuously adjust aligning and capturing during communication. To minimize impact of fading and interference on the channel, and to require high confidentiality and a high transmission rate, the APT needs to be adjusted in real time to adapt to a change.

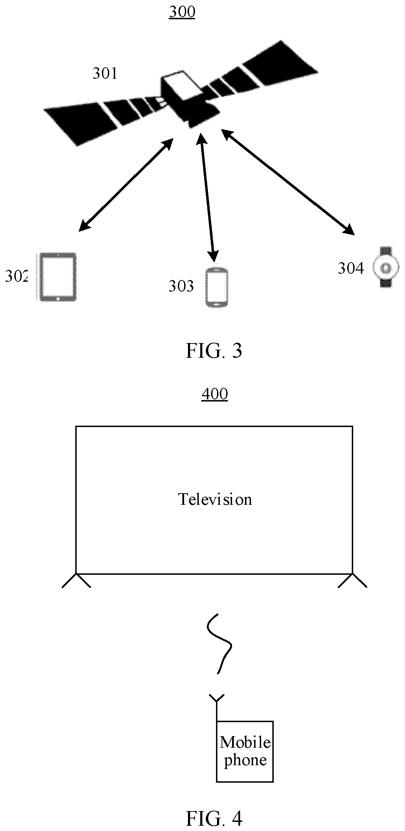

FIG. 3 is another schematic diagram of a communication system to which an embodiment of this application is applicable. FIG. 3 shows a satellite communication system 300 to which an embodiment of this application is applied. The satellite communication system 300 includes a satellite base station 301 and terminal-type network elements 302, 303, and 304. The satellite base station provides a communication service for the terminal-type network element, and the terminal-type network element may be a terminal device in the foregoing possible implementations. The satellite base station transmits downlink data to the terminal, where the data is coded by using channel coding, and data obtained through channel coding is transmitted to the terminal after constellation modulation. The terminal transmits uplink data to the satellite base station, where the uplink data may also be coded by using channel coding, and coded data is transmitted to the satellite base station after constellation modulation.

FIG. 4 is another schematic diagram of a communication system to which an embodiment of this application is applicable. FIG. 4 shows a communication system 400 when an embodiment of this application is applied to a wireless projection scenario. The communication system 400 includes a television and a mobile phone, and information is exchanged between the television and the mobile phone. In addition, embodiments of this application may be alternatively applied to a plurality of application scenarios such as data coding and decoding in a virtual reality (virtual reality, VR) game and a mobile phone application (application, APP). It should be understood that, in the foregoing application scenarios, the television, the mobile phone, or the like may be configured to perform a corresponding function of the network device in embodiments of this application, or may be configured to perform a corresponding function of the terminal device in embodiments of this application. This is not limited in embodiments of this application.

Based on the foregoing communication system, this application provides a control channel transmission method. The following explains and describes some nouns or terms used in this application. The nouns or terms and related explanations and descriptions thereof are also a part of content of the present invention.
1. Physical downlink control channel PDCCH and physical reception link control channel PRxCCH

The physical downlink control channel (physical downlink control channel, PDCCH) mainly carries downlink control information (downlink control information, DCI), and carries control information related to data transmission, such as resource allocation information of the data transmission, format information of an uplink/downlink resource in a slot, and power control information of an uplink and downlink data channel and signal.

In LTE, a time-domain resource of the PDCCH is in the first one to three symbols of each slot, and a symbol length is indicated by a physical control format indicator channel (physical control format indicator channel, PCFICH). In 5G NR, because a system bandwidth is larger, a more flexible PDCCH resource allocation solution is required. A time-frequency domain resource position occupied by the PDCCH is defined as a control channel resource set (control resource set, CORESET), and the CORESET may be configured in a manner such as higher layer signaling. A control channel element (control channel element, CCE) is a basic unit of the PDCCH. One CCE occupies N resource element groups (resource element groups, REGs) in time-frequency domain.

One REG corresponds to one OFDM symbol in time domain and one resource block (resource block, RB) in frequency domain, and includes twelve consecutive resource elements (resource elements, REs). One determined PDCCH may include one, two, four, eight, or sixteen CCEs, and a specific value is determined by a size (DCI payload size) of a DCI payload and a required coding rate. A quantity of CCEs forming the PDCCH is referred to as an aggregation level (aggregation level, AL). The base station may select an appropriate aggregation level based on a channel status. When the channel status is poor, the aggregation level is high.

In a possible implementation, a physical layer control channel, namely, the physical reception link control channel (physical reception link control channel, PRxCCH), may be introduced. A function of the PRxCCH is similar to that of a PDCCH in LTE and 5G. Specifically, the PRxCCH is a channel for transmitting control information, and the control information schedules data transmission. It should be understood that, usually, a standard protocol is described from a perspective of a terminal device. Therefore, a physical layer downlink control channel may be described as a physical layer reception link control channel.

2. Physical downlink shared channel PDSCH and physical reception link shared channel PRxSCH The physical downlink shared channel (physical downlink shared channel, PDSCH) is a physical layer channel that carries downlink service data.

A PDSCH sending procedure may include scrambling, modulation, layer mapping, antenna port mapping, virtual resource block mapping, physical resource block mapping, and the like.

In a possible implementation, a physical layer data channel, namely, the physical reception link shared channel (physical reception link shared channel, PRxSCH), may be introduced. A function of the PRxSCH is similar to that of a PDSCH in LTE and 5G. Specifically, the channel may be a channel used by a terminal device to receive data, and/or a channel used by a network device to transmit data. It should be understood that, usually, a standard protocol is described from a perspective of the terminal device. Therefore, a physical layer downlink data channel may be described as a physical layer reception data channel.

3. Physical uplink control channel PUCCH and physical transmission link control channel PTxCCH

The physical uplink control channel (physical uplink control channel, PUCCH) mainly carries uplink control information (uplink control information, UCI). Specifically, the UCI may include information for applying, by a terminal device, to a network device for an uplink resource configuration, information for replying whether downlink service data is correctly received by the terminal device, and channel state information (channel state information, CSI) of a downlink channel reported by the terminal device.

In a possible implementation, a physical layer control channel, namely, the physical transmission link control channel (physical transmission link control channel, PTxCCH), may be introduced. A function of the PTxCCH is similar to that of a PUCCH in LTE and 5G. Specifically, the channel is a channel used by the terminal device to transmit control information, and/or a channel used by the network device to receive control information. The control information may include at least one of the following: ACK/NACK information, channel state information, a scheduling request, and the like. It should be understood that, usually, a standard protocol is described from a perspective of the terminal device. Therefore, a physical layer uplink control channel may be described as a physical layer transmission link control channel.

4. Physical uplink shared channel PUSCH and physical transmission link shared channel PTxSCH The physical uplink shared channel (physical uplink shared channel, PUSCH) is for transmitting uplink service data. The PUSCH may be dynamically scheduled by DCI, may be configured by using a higher layer parameter to perform scheduling-free transmission, or may be semi-persistently scheduled by DCI after being configured by using a higher layer parameter.

A PUSCH sending procedure may include processes such as scrambling, modulation, layer mapping, transform precoding, precoding, resource mapping, and symbol generation.

In a possible implementation, a physical layer data channel, namely, the physical transmission link shared channel (physical transmission link shared channel, PTxSCH), may be introduced. A function of the PTxSCH is similar to that of a PUSCH in LTE and 5G. Specifically, the channel is a channel used by a terminal device to transmit data, and/or a channel used by a network device to receive data. It should be understood that, usually, a standard protocol is described from a perspective of the terminal device. Therefore, a physical layer uplink data channel may be described as a physical layer transmission data channel.

### 5. Downlink control information DCI

The downlink control information (downlink control information, DCI) is control information that is transmitted on a PDCCH and that is related to a PDSCH or a PUSCH. A terminal device can correctly process PDSCH data or PUSCH data only when correctly decoding the DCI.

Different DCI may be for different purposes, for example, DCI for allocation of an uplink/downlink transmission resource, DCI for adjusting uplink power control, and DCI for downlink dual-stream spatial division multiplexing. The DCI for different purposes may be distinguished by using different DCI formats.

Specifically, information included in the DCI may be classified into three types, and the DCI may include at least one of the three types. First-type information is information for channel estimation, for example, a time-frequency resource indication and a demodulation reference signal (demodulation reference signal, DMRS). Second-type information is information for decoding a PDSCH, for example, a modulation and coding scheme (modulation and coding scheme, MCS), a hybrid automatic repeat request process number (hybrid automatic repeat request process number, HARQ process number), and a new data indicator (new data indicator, NDI). Third-type information is information for sending UCI, for example, a PUCCH resource, transmit power control (Transmit power control, TPC), a code block group transmission information (Code block group transmission information, CBG) configuration, a channel state information (Channel state information, CSI) trigger message, and a sounding reference signal (Sounding reference signal, SRS) trigger message.

To reduce a quantity of times for which the terminal device performs blind detection, it is proposed that the information included in the DCI is transmitted in parts. For example, the first-type information is transmitted as first DCI, the second-type information is transmitted as second DCI, and the third-type information is transmitted as third DCI. Alternatively, for another example, the first-type information and the second-type information are transmitted as first DCI, and the third-type information is transmitted as second DCI. Alternatively, for another example, the first-type information is transmitted as first DCI, and the second-type information and the third-type information are transmitted as second DCI. The information included in the DCI is transmitted in parts, so that the terminal device can process different types of information in parallel. Therefore, a communication latency is reduced.

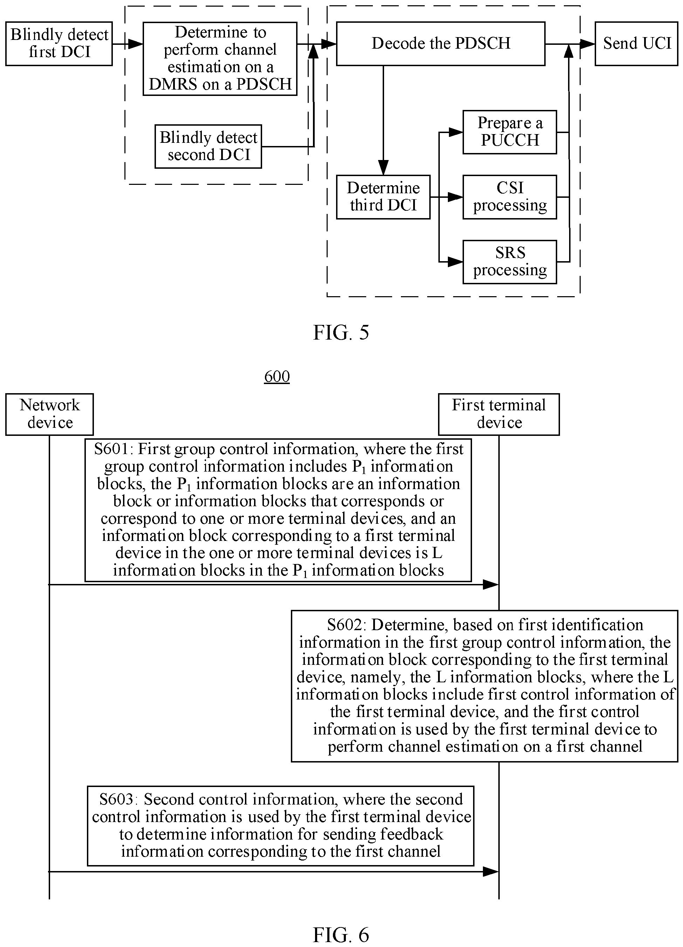

FIG. 5 shows a parallel processing procedure of a terminal device when DCI is transmitted in parts. In FIG. 5, a specific manner of transmitting the DCI in parts is to use the first-type information as first DCI, the second-type information as second DCI, and the third-type information as third DCI. In this case, the terminal device can implement parallel processing of channel estimation and performing blind detection on the second DCI, and/or parallel processing of decoding a PDSCH and determining the third DCI, and/or parallel processing of decoding the PDSCH, preparing a PUCCH, CSI processing, and SRS processing.

In addition, this application further proposes DCI transmitted on a control channel, which is referred to as group DCI. It may be simply understood that one piece of group DCI includes DCI of a plurality of carriers of a plurality of terminal devices. For example, one piece of group DCI may include DCI corresponding to different carriers of a same terminal device. For another example, one piece of group DCI may include DCI corresponding to a same carrier of different terminal devices.

The solution in this embodiment of this application is applicable to the first DCI, the second DCI, or the third DCI. This is not limited herein.

### 6. Blind detection by a terminal device

Because the terminal device does not know in advance a format of DCI carried on a received PDCCH, and does not know a candidate PDCCH that transmits the DCI, the terminal device needs to perform PDCCH blind detection to receive the corresponding DCI. Before the terminal device successfully decodes the PDCCH, the terminal device may attempt to decode each possible candidate PDCCH until the terminal device successfully detects the PDCCH, until a quantity of DCIs that the terminal device expects to receive is reached, or until a quantity limit of times for which the terminal device performs blind detection is reached.

In other words, DCI has a plurality of different formats. When receiving the PDCCH, the terminal device cannot determine a format of DCI to which the received DCI belongs, and consequently cannot correctly process data transmitted on a channel such as a PDSCH or a PUSCH. Therefore, the terminal device needs to perform blind detection on the format of the DCI. The terminal device usually does not know the format of the current DCI, and does not know a position of information required by the terminal device. However, the terminal device knows a format of information expected by the terminal device, and different formats of expected information correspond to different expected RNTIs and CCEs. Therefore, the terminal device may perform CRC on the received DCI by using an expected RNTI and CCE, to know whether the received DCI is required by the terminal device, and know a corresponding DCI format and modulation scheme, and further touch the DCI. The foregoing procedure is a blind detection process performed by the terminal device.

It should be understood that, a cyclic redundancy check (cyclic redundancy check, CRC) bit is usually added to an information bit of the DCI to implement an error detection function of the terminal device, and scrambling is performed in the CRC bit by using different types of radio network identifiers (radio network temporary identifiers, RNTIs), so that the RNTIs are implicitly encoded in the CRC bit. It should be further understood that the different RNTIs can be for both identifying the terminal device and distinguishing the DCI.

In addition, for the blind detection process performed by the terminal device, because the PDCCH includes a plurality of CCEs, or the DCI is carried on the plurality of CCEs, the terminal device needs to perform blind detection on the plurality of CCEs. However, if the terminal device performs blind detection one by one at a granularity of a CCE, efficiency is low. Therefore, search space (search space) is specified in a protocol. The search space may be simply understood as follows: When performing PDCCH blind detection, the terminal device performs blind detection at a granularity of several CCEs. For example, if a value of a CCE aggregation level AL defined in the search space is 4 and 8, when performing blind detection, the terminal device first performs blind detection once at a granularity of four CCEs, and then performs blind detection once at a granularity of eight CCEs.

Specifically, when the value of the CCE aggregation level AL defined in the search space is 4 or 8, when identifying the PDCCH, a network device further uses a CCE position index (CCE index) parameter in addition to an aggregation level parameter (which is a value selected from 4 and 8). The CCE position index is obtained through calculation based on time-frequency domain information of the PDCCH, an aggregation level, and the like. The terminal device cannot accurately know an aggregation level of a CCE occupied by the PDCCH and a start position index of the CCE. However, before receiving the PDCCH, the terminal device receives higher layer signaling, where the higher layer signaling indicates the time-frequency domain information of the PDCCH and the like. In addition, the terminal device determines, based on a protocol or an indication of the network device, that the aggregation level of the PDCCH may be 4 or 8. Therefore, during blind detection, the terminal device may first calculate the CCE position index (including the start position index of the CCE) in the PDCCH based on the time-frequency domain information of the PDCCH and the aggregation level 4, and perform blind detection on the corresponding CCE. Then, when no expected DCI is detected or an expected quantity of detected DCI is not reached, the terminal device may calculate the start position index (the CCE position index) of the CCE in the PDCCH based on the time-frequency domain information of the PDCCH and the aggregation level 8, and perform blind detection on the corresponding CCE.

### 7. Communication service availability CSA

The communication service availability (communication service availability, CSA) may be understood as a probability that a receiving end in a communication system receives available data and receives the available data in time (to be specific, duration from sending to receiving is within an allowed maximum end-to-end latency).

It should be understood that, if the data received by the receiving end is damaged, or the data is not received in time (to be specific, the duration from sending to receiving exceeds the allowed maximum end-to-end latency), it is considered that a communication service corresponding to the data is unavailable.

### 8. Spectral efficiency

The spectral efficiency (spectrum efficiency) may be simply understood as a parameter for measuring effectiveness of a communication system. For example, the spectral efficiency may be referred to as spectral utilization or a system capacity, and is for measuring the system effectiveness and describing a capacity that can be provided. The spectral efficiency may be defined as a valid information rate of system transmission divided by a communication channel bandwidth, that is, a quantity of bits that can be transmitted per second on a unit bandwidth transmission channel, and represents utilization efficiency of a spectrum resource in the system. A unit of the spectral efficiency is bit/s/Hz.

Ultra-reliable low-latency communication (ultra-reliable low-latency communication, URLLC) is one of three scenarios of 5G. In the URLLC, a very low latency and very high communication-service availability and reliability need to be supported. The URLLC is mainly applied to remote control, such as remote driving, self driving, and telemedicine; an intelligent transportation system; industrial intelligent automation, such as machine control and operation control; high-speed railway communication; middle and high voltage power distribution automation; motion control; separation automation; and the like.

In an industrial manufacturing scenario, there is also a specific requirement for a low latency and high reliability of communication. A manufacturing device in a smart factory is connected to an enterprise cloud or an onsite control system through 5G, to collect onsite environment data and production data, analyze a production status in real time, and achieve an entire unattended and wireless production line. Because smart industrial manufacturing has a high requirement on technical performance, and in the high-end manufacturing industry, there is a very high demand for a latency and stability of workshop equipment, in the industrial manufacturing scenario, a specific and high requirement is imposed on a latency and reliability of communication.

When simulation modeling is performed by using a common NR/5G technology, most simulation results indicate that the common NR/5G technology can simultaneously support a maximum of 20 users. In other words, a communication system can satisfy CSA required in industrial manufacturing when there are a maximum of 20 users. However, when there are more users, for example, 50 users, the common NR/5G technology cannot satisfy the CSA required in the industrial manufacturing. That is, because resources transmitted in the communication system are limited within specific duration, the common NR/5G technology cannot support a case in which there are simultaneously a large quantity of users. In other words, spectral efficiency of the common NR/5G technology is low. Consequently, a latency and reliability of communication cannot satisfy a requirement in a large-scale industrial manufacturing scenario.

To improve the spectral efficiency in the communication system, further reduce an information transmission latency, and improve information transmission reliability, this application provides a control information transmission method.

FIG. 6 is a schematic flowchart of a control channel transmission method 600 according to this application. The method 600 includes the following steps.

S601: A network device sends first group control information, where the first group control information includes P₁ information blocks (blocks), and P₁ is an integer greater than or equal to 1.

The P₁ information blocks are an information block or information blocks that corresponds or correspond to one or more terminal devices. An information block corresponding to a first terminal device in the one or more terminal devices is L information blocks in the P₁ information blocks. L is an integer greater than or equal to 1, and L is less than or equal to P₁. Correspondingly, the first terminal device receives the first group control information.

It should be understood that the first terminal device in this application is any terminal device scheduled in the first group control information. In other words, the information block corresponding to the first terminal device may be any L information blocks in the P₁ information blocks. This is not limited in this application.

In addition, the information block corresponding to the first terminal device, namely, the L information blocks, includes first control information of the first terminal device. The first control information is for estimating a first channel of the first terminal device. The first group control information includes first identification information. The first identification information is for determining the information blocks corresponding to the one or more terminal devices. The first channel is a channel corresponding to the first control information. For example, when the first control information is DCI, the first channel may be a PDSCH.

It should be understood that the quantity P₁ of the information blocks included in the first group control information may be predefined (for example, predefined in a protocol), or may be notified by the network device to the terminal device by using higher layer signaling or physical layer signaling. The block quantity P₁ is a positive integer, for example, 5, 8, or 10.

Similarly, a quantity of bits of the first group control information may be predefined (for example, predefined in a protocol), or may be notified by the network device to the terminal device by using higher layer signaling or physical layer signaling. The quantity of bits of the first group control information is a positive integer, for example, 50, 68, or 80.

A manner of determining the quantity of the information blocks included in the first group control information and the quantity of bits is not limited in this application.

Optionally, in the first group control information, a quantity of bits of each block may be fixed. For example, a quantity of bits of a block of each terminal device is 8 bits. A quantity of bits required by the terminal device may be determined based on a candidate time/frequency resource set and/or a candidate MCS set that are/is configured by the network device for the terminal device by using higher layer signaling.

For example, one block may include at least one of the following information fields:
- carrier indicator field Carrier index -------- 0, 1, 2, 3, or 4 bits (identifying a carrier);
- time domain resource allocation indicator field time domain resource allocation indicator -------- 0, 1, 2, 3, or 4 bits (indicating a time domain resource);
- frequency domain resource allocation indicator field frequency domain resource allocation indicator -------- 0, 1, 2, 3, or 4 bits (indicating a frequency domain resource); and
- modulation and coding measurement indicator field MCS indicator -------- 0, 1, 2, 3, or 4 bits (indicating a modulation and coding scheme).

If the quantity of bits required by the terminal device is less than 8 bits, the network device may fill zero in a most significant bit or a least significant bit, and the terminal device may intercept and interpret a bit required in a less significant bit and a bit required in a more significant bit.

If the quantity of bits required by the terminal device is greater than 8 bits, the network device may intercept a most significant bit or a least significant bit for transmission, and the terminal device may fill zero in a more significant bit or a less significant bit until the quantity of bits required is reached for interpretation.

Optionally, each block in the first group control information may have a same quantity of bits. For example, the quantity of bits may be predefined in a protocol, or may be notified by the network device to the terminal device by using higher layer signaling or physical layer signaling. For example, the quantity of bits of the information block is 8, 10, 12, 15, 18, or 20.

Optionally, the quantity of bits of the first group control information may be a quantity of information blocks multiplied by the quantity of bits of the information block. For example, if the quantity of information blocks is 5, and the quantity of bits of the information block is 10, the quantity of bits of the first group control information is 5*10=50.

Optionally, each block in the first group control information may have different quantities of bits. For example, the network device may notify the terminal device of the quantities of bits of the information blocks by using higher layer signaling or physical layer signaling.

It should be understood that the higher layer signaling in this application may be radio resource control (radio resource control, RRC) signaling, media access control (media access control, MAC) signaling, other higher layer signaling, or the like. The physical layer signaling in this application may be DCI, other physical layer signaling, or the like.

It should be further understood that the first group control information includes a plurality of pieces of first control information, and belongs to one type of group control information. Single control information is opposite to the group control information, and the single control information includes one piece of control information.

Optionally, the first control information is first downlink control information DCI.

It should be further understood that the first control information may include at least one of the following: time domain resource allocation information, frequency domain resource allocation information, antenna port information, layer quantity information, and information about a sequence of a demodulation reference signal.

In a possible implementation, L=1. To be specific, in the first group control information, the information block corresponding to the first terminal device is one information block. The information block includes M₁ pieces of control information. The M₁ pieces of control information are control information of M₁ carriers of the first terminal device. M₁ is an integer greater than or equal to 1. Alternatively, in other words, different information blocks in the first group control information correspond to different terminal devices, and one terminal device corresponds to one information block. Alternatively, in other words, one information block in the first group control information corresponds to control information of one or more carriers of one terminal device. Optionally, in the foregoing possible implementation, to distinguish between the information blocks in the first group control information that correspond to terminal devices, the first identification information may be used in the first group control information for distinguishing. That is, the first identification information indicates one or more terminal devices scheduled by the first group control information. Therefore, after receiving the first group control information, the terminal device may determine, based on the first identification information, the information block corresponding to the first group control information. For example, the first terminal device determines, based on the first identification information in the first group control information, the information block corresponding to the first terminal device.

Optionally, the first identification information is a bit map (bit map), and in the bit map, one bit corresponds to one terminal device. It should be understood that the first identification information may be before the P₁ information blocks, or the first identification information may be in at least one of the P₁ information blocks.

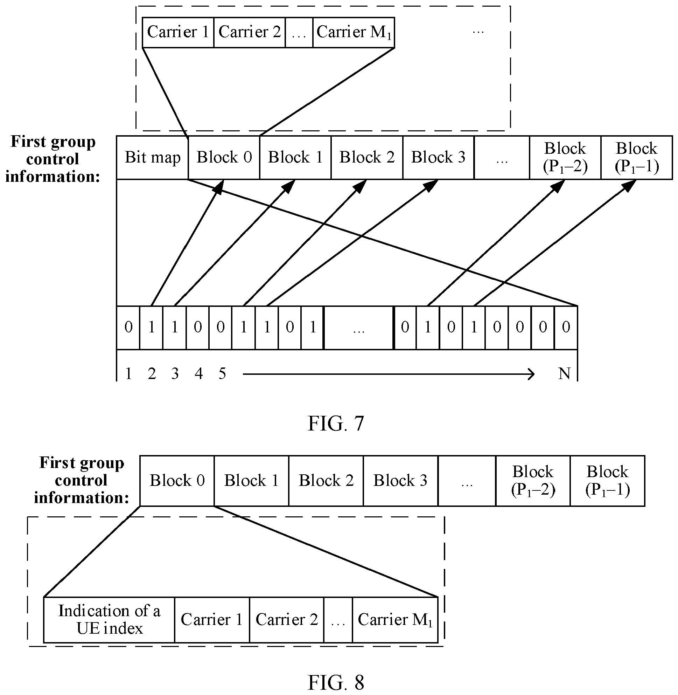

For ease of understanding a structure of the first group control information in the foregoing possible implementation, refer to FIG. 7 and FIG. 8. The following separately describes in detail the structure of the first group control information in a case in which the first identification information is before the P₁ information blocks and a case in which the first identification information is in at least one of the P₁ information blocks. In addition, the first identification information is a bit map.

FIG. 7 is a schematic diagram of an example structure of the first group control information. As shown in FIG. 7, the first group control information includes a bit map and the P₁ information blocks. In other words, in the first group control information, the bit map is before the P₁ information blocks. The bit map may include N bits, where N is an integer greater than or equal to 1. Each bit corresponds to one terminal device. In this case, the N bits indicate that the first group control information can schedule N terminal devices in total. A quantity of terminal devices that are actually scheduled by the first group control information is a quantity of bits whose bit values are 1 in the bit map, that is, the quantity of terminal devices that are actually scheduled by the first group control information is less than or equal to N.

In FIG. 7, if it is assumed that the information block corresponding to the first terminal device is a block 0, the block 0 includes the control information of the M₁ carriers of the first terminal device, where M₁ is an integer greater than or equal to 1. For example, a quantity of terminal devices that can be scheduled by the first group control information is 20, that is, N=20. The quantity of actually scheduled terminal devices is 10, that is, P₁=10. Assuming that identifiers of terminal devices are 0 to 19, identifiers of the actually scheduled terminal devices are 1, 2, 5, 6, 8, and the like.

FIG. 8 is a schematic diagram of another example structure of the first group control information. As shown in FIG. 8, the first group control information includes the P₁ information blocks. Each information block includes the first identification information (for example, an indication of a UE index) and control information of a terminal device corresponding to first identification information in the information block. The control information of the terminal device may be control information of a plurality of carriers of the terminal device. For example, a terminal device corresponding to first identification information (an indication of a UE index) in a block 0 is the first terminal device, and the block 0 includes the control information of the M₁ carriers of the first terminal device, where M₁ is an integer greater than or equal to 1. In other words, a terminal device scheduled in the block 0 is the first terminal device, and the control information of the M₁ carriers of the first terminal device is scheduled. It should be understood that each information block above may correspond to one group of terminal devices, and each information block may actually schedule one terminal device in the group of terminal devices corresponding to the information block. The specifically scheduled terminal device in the group of terminal devices may be indicated by the first identification information. For example, a group of terminal devices corresponding to the block 0 includes three terminal devices A, B, and C. A UE index of the terminal device A is 1, a UE index of the terminal device B is 2, and a UE index of the terminal device C is 3. When an indication of a UE index included in the block 0 indicates that the UE index is 2, the terminal device B is a scheduled terminal device.

It should be understood that the indication of the UE index may be in different forms, for example, in a form of a bit map, or for another example, in a form of a bit value. A specific form of the indication of the UE index is not limited in this application.

In another possible implementation, L=M₂. To be specific, in the first group control information, the information block corresponding to the first terminal device is M₂ information blocks. The M₂ information blocks are information blocks corresponding to M₂ carriers of the first terminal device. M₂ is an integer greater than or equal to 1, and M₂ is less than or equal to P₁. Alternatively, in other words, the plurality of information blocks in the first group control information correspond to a plurality of carriers, and the plurality of carriers are carriers of a same terminal device or different terminal devices. Alternatively, in other words, one information block in the first group control information corresponds to control information of one carrier of one terminal device. It should be understood that a difference between this possible implementation and the foregoing possible implementation lies in that, in the foregoing possible implementation, one information block of the first group control information may correspond to a plurality of carriers of one terminal device, but in this possible implementation, one information block of the first group control information corresponds to only one carrier of one terminal device.

Optionally, in the foregoing possible implementation, to distinguish between the information blocks in the first group control information that correspond to carriers of terminal devices, the first identification information is used in the first group control information for distinguishing. That is, the first identification information indicates one or more carriers scheduled by the first group control information, and the one or more carriers correspond to a same device or different terminal devices. For example, the first identification information is a bit map (bit map), and in the bit map, one bit corresponds to one carrier of one terminal device. It should be understood that the first identification information may be before the P₁ information blocks, or the first identification information may be in at least one of the P₁ information blocks.

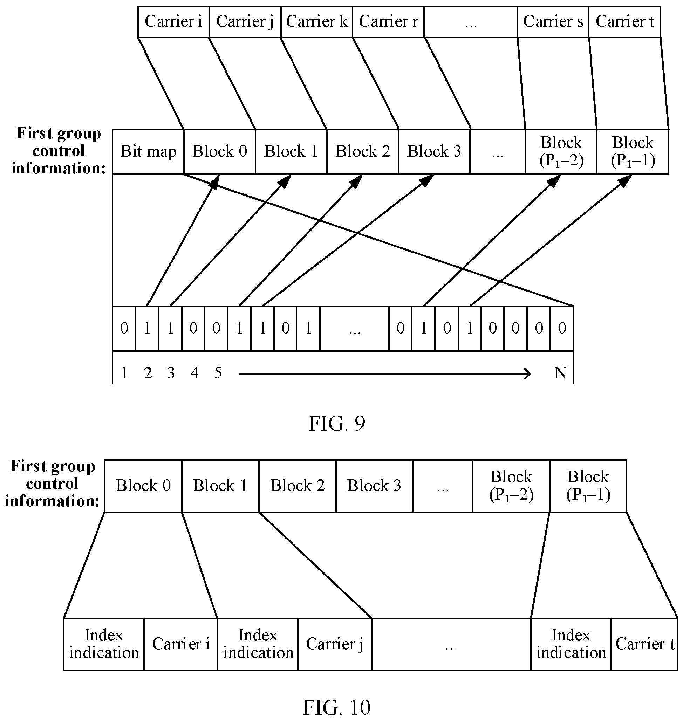

For ease of understanding a structure of the first group control information in the foregoing possible implementation, refer to FIG. 9 and FIG. 10. The following separately describes in detail the structure of the first group control information in a case in which the first identification information is before the P₁ information blocks and a case in which the first identification information is in at least one of the P₁ information blocks. In addition, the first identification information is a bit map.

FIG. 9 is a schematic diagram of another example structure of the first group control information. As shown in FIG. 9, the first group control information includes a bit map and the P₁ information blocks. In other words, in the first group control information, the bit map is before the P₁ information blocks. The bit map includes N bits. Each bit corresponds to one carrier of one terminal device. In this case, the N bits indicate that the first group control information can schedule N carriers in total. A quantity of carriers actually scheduled by the first group control information is a quantity of bits whose bit values are 1 in the bit map, that is, the quantity of actually scheduled carriers is less than or equal to N. The M₂ carriers of the first terminal device are included in the carriers actually scheduled by the first group control information. It should be understood that the information block corresponding to the first terminal device may be M₂ consecutive information blocks in the P₁ information blocks, or may be M₂ inconsecutive information blocks in the P₁ information blocks. This is not limited in this application.

For another example, the first group control information in FIG. 9 includes a bit map and the P₁ information blocks. The bit map includes N bits. Each bit corresponds to one carrier. Assuming that identifiers (indexes) of 20 carriers that can be scheduled are 0 to 19, that is, N=20, identifiers of actually scheduled carriers are 1, 2, 5, 6, 8, and the like.

FIG. 10 is a schematic diagram of another example structure of the first group control information. As shown in FIG. 10, the first group control information includes the P₁ information blocks. At least one information block includes the first identification information (for example, an index indication) and control information of one carrier that is of one terminal device and that corresponds to the first identification information in the information block. That is, the first identification information indicates a carrier of a terminal device scheduled by the information block. For example, a terminal device corresponding to first identification information in a block 0 is the first terminal device, and the block 0 includes control information of a carrier i of the first terminal device. Alternatively, the terminal device scheduled in the block 0 is the first terminal device, and control information of a carrier i of the first terminal device is scheduled. It should be understood that each information block above may correspond to a group of carriers, and the group of carriers is carriers of a group of terminal devices. Each information block may actually schedule one carrier in a group of carriers corresponding to the information block. In other words, each information block may actually schedule one carrier of one terminal device in a group of terminal devices. The specifically scheduled carrier and the terminal device may be indicated by the first identification information. For example, a group of carriers corresponding to the block 0 includes three carriers A, B, and C. An index of the carrier A is 1, an index of the carrier B is 2, and an index of the carrier C is 3. When an indication of an index included in the block 0 indicates that the index is 2, the carrier B is a scheduled carrier. It should be noted that, when the scheduled carrier is indicated, because the carrier corresponds to the terminal device, the scheduled carrier in the information block and the terminal device are finally indicated.

Therefore, the group control information is transmitted, so that when the plurality of pieces of control information are simultaneously transmitted, only one CRC bit for blind detection needs to be added. CRC bit overheads are reduced, overheads of the control information are reduced, and spectral efficiency is improved. Therefore, communication efficiency is further improved. In addition, the group control information includes the scheduled terminal device or the scheduled carrier of the terminal device, so that a terminal device can be dynamically grouped, more flexible transmission of the group control information is implemented, and the terminal device is dynamically scheduled.

S602: The first terminal device determines, based on the first identification information in the first group control information, the information block corresponding to the first terminal device.

It should be understood that the information block corresponding to the first terminal device is the L information blocks. The L information blocks include the first control information of the first terminal device. The first control information is used by the first terminal device to estimate the first channel. For example, the first control information is DCI for channel estimation, and includes a time-frequency resource indication, a demodulation reference signal DMRS, and the like. In this case, the first channel may be a data channel, for example, a PDSCH, a PUSCH, a PRxSCH, or a PTxSCH.

Specifically, in this embodiment of this application, the first identification information may be a bit map (bit map). For example, the first terminal device may determine, based on a position whose bit value is 1 in the bit map, a position of the information block corresponding to the first terminal device.

In a possible implementation, the method 600 further includes step S1: The network device sends first configuration information. Correspondingly, the first terminal device receives the first configuration information. The first configuration information includes a second identifier corresponding to the first terminal device. In this case, step S602 may specifically include: The first terminal device determines, based on the first identification information in the first group control information and the second identifier, the information block corresponding to the first terminal device. Optionally, the second identifier is an identifier of the first terminal device, namely, a UE index. Optionally, the second identifier may be referred to as a first index. In other words, the second identifier is index information of the first terminal device. It should be understood that the second identifier corresponds to the first terminal device, and the second identifier is for determining that a scheduled terminal device is the first terminal device. Optionally, a carrier that is of the first terminal device and that is specifically scheduled by the first group control information may be determined by using information indicating the carrier. The information indicating the carrier may be a carrier indicator, a carrier identifier bit map, or the like. This is not limited in this application.

Specifically, in this embodiment of this application, after the first terminal device receives the first group control information shown in FIG. 7, if the second identifier received by the first terminal device is the UE index=1, the first terminal device may determine, based on UE index=1 and the bit map, that the information block corresponding to the first terminal device is the block 0. If the second identifier received by the first terminal device is UE index=5, the first terminal device may determine, based on the UE index=5 and the bit map, that the information block corresponding to the first terminal device is a block 2.

Optionally, the network device configures, by using higher layer signaling (for example, RRC signaling), the second identifier corresponding to the first control information of the first terminal device in the first group control information. To be specific, the first configuration information is transmitted by using the higher layer signaling. Then, the terminal device determines an information block position of the first control information of the first terminal device in the first group control information based on the first identification information and the second identifier. For step S602, specifically, in this embodiment of this application, the first terminal device determines the information block position of the first control information of the first terminal device in the first group control information based on the second identifier and a position at which a value of bit information is 1 in the first identification information.

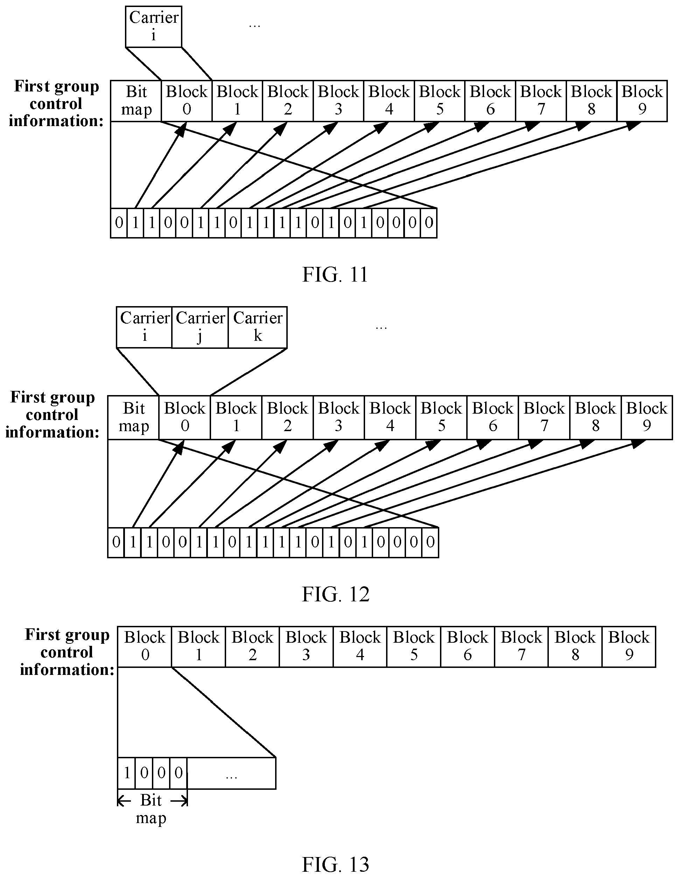

For example, in the following, when the first identification information is before the P₁ information blocks (that is, the case shown in FIG. 7), the first identification information included in the first group control information is a bit map, a quantity of bits of the bit map is 20, and a total quantity of information blocks is 10. Refer to FIG. 11 and FIG. 12. A correspondence between an information block in the first group control information and a terminal device and a process in which the first terminal device determines, based on the first identification information and the second identifier, a position of the information block in which the first control information of the first terminal device is located are described in detail.

Optionally, the network device may configure the second identifier for the first terminal device by using higher layer signaling. The second identifier may be a user identifier corresponding to scheduling information of the first terminal device in the first group control information. Optionally, one information block of the first group control information may include first control information of one carrier of the first terminal device.

As shown in FIG. 11, the first group control information includes 10 blocks (a block 0 to a block 9), a bit map includes 20 bits, and one block in the first group control information schedules first control information of one carrier of one terminal device. For example, the block 0 schedules a carrier i (carrier i) of the first terminal device. It should be understood that a terminal device scheduled by the first group control information is a terminal device corresponding to a position at which a bit value is 1 in the bit map. For example, in the first group control information shown in FIG. 11, identifiers of terminal device corresponding to the bit map are 0 to 19, that is, UE indexes are 0 to 19, but actually scheduled UE indexes are 1, 2, 5, 6, 8, 9, 10, 11, 13, and 15. First control information of a terminal device whose UE index is 1 is information indicated by the block 0, first control information of a terminal device whose UE index is 2 is information indicated by the block 1, and so on.

Optionally, the first terminal device may determine, based on a position at which a bit value corresponding to the second identifier in the first identification information is 1, the information block position of the first control information of the first terminal device.

As shown in FIG. 12, the first group control information includes 10 blocks, a bit map includes 20 bits, and one block in the first group control information schedules first control information of a plurality of carrier of one terminal device. For example, the block 0 schedules three carriers (carriers i, j, and k) of the first terminal device. It should be understood that, similar to FIG. 11, a correspondence between a block in the first group control information and a terminal device is similar to that in FIG. 11. Details are not described herein again. A difference lies only in that at least one block included in the first group control information may include first control information of a plurality of carriers.

It should be understood that when one block in the first group control information includes first control information of a plurality of carriers, a quantity of bits of one block is related to a quantity of carriers. For example, a quantity of bits of one block is S*T, where S is a quantity of bits of first control information of one carrier, and T is a quantity of scheduled carriers.

Optionally, the information block may include information indicating an index of a carrier and corresponding scheduling information of the carrier. For example, if all time-frequency resource bits are 0, it may indicate that no data is transmitted on the carrier, that is, the carrier is not scheduled.

Optionally, the information block may include a carrier identifier bit map (carrier index bit map) field, and the carrier identifier bit map field indicates an index of a scheduled carrier. A quantity of bits of the field may be predefined in a protocol, or may be notified by the network device to the terminal device by using signaling. For example, the quantity of bits of the field is 4, and one bit corresponds to one carrier. If a value of a bit is 1, it indicates that a carrier corresponding to the bit is scheduled. If a value of a bit is 0, it indicates that a carrier corresponding to the bit is not scheduled.

Optionally, one information block may include a plurality of pieces of time-frequency resource indication information and a plurality of pieces of MCS information. In this manner, one piece of time-frequency resource indication information corresponds to one piece of MCS information, so that more joint MCS indication, to be specific, data transmission in a more flexible modulation and coding scheme, can be implemented. Alternatively, one information block may include a plurality of pieces of time-frequency resource indication information and one piece of MCS information. In this manner, the plurality of pieces of time-frequency resource indication information may be corresponding to one piece of MCS information, so that signaling overheads can be further reduced. In other words, MCS information of a plurality of carriers may be the same. Optionally, the network device configures, by using higher layer signaling (for example, RRC signaling), an identifier of the information block that is of the first control information of the first terminal device and that corresponds to the first terminal device in the first group control information, and the second identifier that is of the first control information of the first terminal device and that corresponds to the first terminal device in the first group control information. To be specific, the first configuration information is transmitted by using the higher layer signaling. Then, then the first terminal device first determines, based on the identifier of the information block corresponding to the first terminal device, the information block corresponding to the first terminal device. Then, whether the information block corresponding to the first terminal device schedules the first terminal device is determined based on the first identification information and the second identifier. It should be understood that the information block corresponding to the first terminal device may schedule a terminal device in a group of terminal devices, that is, the information block corresponding to the first terminal device is also an information block corresponding to the group of terminal devices. The specifically scheduled terminal device is determined by using the first identification information and the second identifier. In other words, whether the information block corresponding to the group of terminal devices schedules the first terminal device may be determined by using the first identification information and the second identifier.

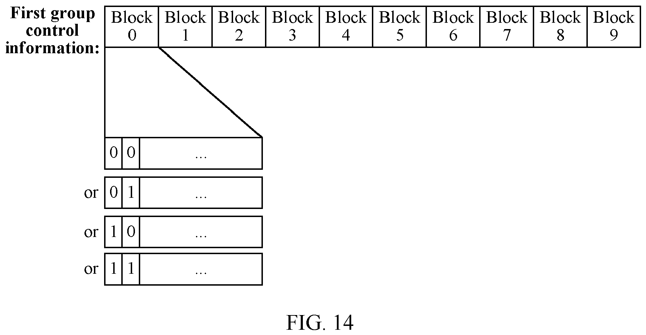

For example, in the following, when the first identification information is in at least one of the P₁ information blocks (that is, the case shown in FIG. 8), a total quantity of information blocks in the first group control information is 10, and the first identification information included in the 10 information blocks is a bit map and a bit value, that is, an indication of a UE index is a bit map and a bit value. Refer to FIG. 13 and FIG. 14. A correspondence between an information block in the first group control information and a terminal device and a process in which the first terminal device determines, based on the first identification information and the second identifier, whether the first terminal device is scheduled in the information block corresponding to the first terminal device are described in detail.

Optionally, the network device may configure, for the first terminal device by using higher layer signaling, a position of an information block in which the first control information of the first terminal device is located and the second identifier corresponding to the first terminal device in the information block. The second identifier may be a user identifier corresponding to the first control information of the first terminal device in the information block in the first group control information.

Optionally, the second identifier may identify the first terminal device in a group of terminal devices corresponding to one information block.

Optionally, the first terminal device may determine, based on that a value of a bit corresponding to the second identifier in first identification information in an information block is 1, that the information block is the information block of the first terminal device. That is, the information block schedules the first terminal device to transmit data.

Optionally, one information block may include first control information of one carrier of the first terminal device.

As shown in FIG. 13, the first group control information includes 10 blocks. Each block includes first identification information (a bit map) and first control information that is of one or more carriers of one terminal device and that corresponds to the first identification information. For example, a block 0 includes first control information of one or more carriers of the first terminal device. It should be understood that one information block of the first group control information may correspond to a plurality of terminal devices. For example, the block 0 may correspond to four terminal devices (for example, the first terminal device to a fourth terminal device). A quantity of bits of the first identification information is 4, and one bit corresponds to one terminal device. It is assumed that the identifier of the first terminal device is 0 (that is, the second identifier is 0) and corresponds to the 1^{st} bit; an identifier of a second terminal device is 1 and corresponds to the 2^{nd} bit; an identifier of a third terminal device is 2 and corresponds to the 3^{rd} bit; and an identifier of the fourth terminal device is 3 and corresponds to the 4^{th} bit. In this case, the first terminal device may determine, based on whether a value of the 1^{st} bit in the first identification information is 1, whether the information block schedules the first terminal device. For example, if the value of the 1^{st} bit is 1, it indicates that the first terminal device is scheduled. If the value of the 1^{st} bit is 0, it indicates that the first terminal device is not scheduled, vice versa. This is not limited in this application. For example, in FIG. 13, the 1^{st} bit value in a bit map included in the block 0 is 1, and a remaining bit value is 0. It indicates that a terminal device scheduled in the block 0 is the first terminal device.

Optionally, one information block may include first control information of a plurality of carriers of the first terminal device.

Optionally, first identification information included in a block may be a bit value. Refer to FIG. 14. When a total quantity of information blocks in the first group control information is 10, and first identification information included in the 10 information blocks are bit values, a correspondence between a terminal device and an information block that is in the first control information and that is indicated by the bit value, and a process in which the first terminal device determines, based on the first identification information and the second identifier, whether the first terminal device is scheduled in the information block corresponding to the first terminal device are described in detail below.

As shown in FIG. 14, the first group control information includes 10 blocks. Each block includes first identification information (a bit value) and first control information that is of one or more carriers of one terminal device and that corresponds to the first identification information. For example, a block 0 includes first control information of one or more carriers of the first terminal device. It should be understood that one information block of the first group control information may correspond to four terminal devices (for example, the first terminal device to a fourth terminal device), and a quantity of bits of the first identification information is 2. In other words, the first identification information is 2-bit information, and bit values of the bit information may be 00, 01, 10, or 11. It is assumed that the identifier of the first terminal device is 0, an identifier of a second terminal device is 1, an identifier of a third terminal device is 2, and an identifier of the fourth terminal device is 3. In this case, the first terminal device may determine, based on that the bit value in the first identification information is 00, that the information block schedules the first terminal device. Alternatively, the second terminal device may determine, based on that the bit value in the first identification information is 1, that the information block schedules the second terminal device, and so on.

Optionally, the information block corresponding to the first terminal device includes carrier indication information. The carrier indication information indicates the M₁ carriers in N carriers of the first terminal device. N is an integer greater than or equal to M₁. That is, a quantity of carriers that can be scheduled in the information block corresponding to the first terminal device is N, and a quantity of carriers that are actually scheduled is M₁. In other words, a quantity of scheduled carriers of the first terminal device and a scheduled carrier may be dynamically adjusted, and an actually scheduled carrier is indicated by the carrier indication information. Alternatively, a quantity of scheduled carriers of the first terminal device is fixed or configured by the network device for the terminal device, a scheduled carrier may be dynamically adjusted, and the actually scheduled carrier is indicated by the carrier indication information.

It should be understood that, in this embodiment of this application, at least one block of the first group control information may include the carrier indication information and control information of a corresponding carrier. When all time-frequency resource bits corresponding to a carrier are 0, it may indicate that no data is transmitted on the carrier, that is, control information of the carrier is not transmitted.

In this embodiment of this application, the carrier indication information included in the block may be a carrier identifier bit map (carrier index bit map). A quantity of bits corresponding to the carrier indication information may be predefined in a protocol, or may be sent by the network device to the terminal device by using higher layer signaling or physical layer signaling. For example, the quantity of bits corresponding to the carrier indication information is 4, and one bit corresponds to one carrier. When a bit value of one bit is 1, it indicates that a carrier corresponding to the bit is scheduled. When a bit value of one bit is 0, it indicates that a carrier corresponding to the bit is not scheduled.

In another possible implementation, the method 600 may further include step S2: The network device sends second configuration information, and correspondingly, the first terminal device receives the second configuration information. The second configuration information includes a third identifier corresponding to a first carrier of the first terminal device. In this case, step 602 specifically includes: The first terminal device determines, based on the first identification information and the third identifier, an information block corresponding to the first carrier of the first terminal device. Optionally, the second configuration information may be transmitted by using higher layer signaling (for example, RRC signaling). This is not limited in this application. Optionally, the third identifier may be referred to as a second index. In other words, the third identifier is index information of the first carrier of the first terminal device. It should be understood that the third identifier corresponds to the first carrier of the first terminal device. Therefore, the third identifier may be for determining that a scheduled terminal device is the first terminal device, and also for determining that the first carrier of the first terminal device is scheduled.

Specifically, in this embodiment of this application, after the first terminal device receives the first group control information shown in FIG. 9, if the third identifier received by the first terminal device is 1, the first terminal device may determine, based on the third identifier and the bit map, that the information block corresponding to the first terminal device is the block 0, and the block 0 includes first control information of the first carrier of the first terminal device.

Optionally, the network device configures, by using higher layer signaling (for example, RRC signaling), the third identifier that is of the first control information of the first carrier of the first terminal device and that corresponds to the first carrier of the first terminal device in the first group of control information, and the terminal device determines, based on the first identification information and the third identifier, a block position of the first control information corresponding to the first carrier of the terminal device in the first group control information.

For step S602, specifically, in this embodiment of this application, the first terminal device determines the information block position of the first control information of the first carrier of the first terminal device in the first group control information based on the third identifier and a position at which a value of bit information is 1 in the first identification information.

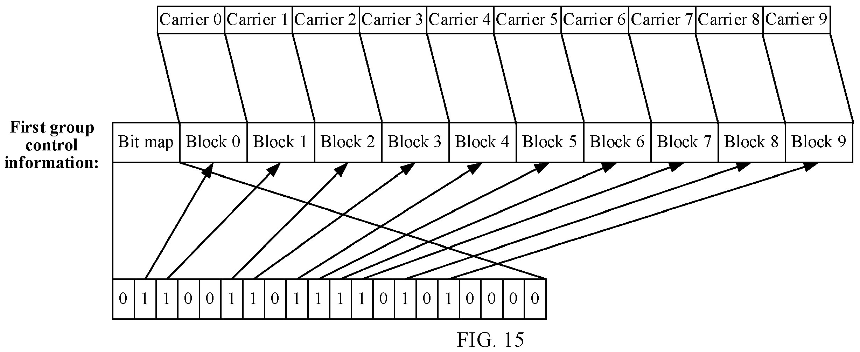

For example, in the following, when the first identification information is before the P₁ information blocks (that is, the case shown in FIG. 9), the second identifier included in the first group control information is a bit map, a quantity of bits of the bit map is 20, and a total quantity of information blocks is 10. Refer to FIG. 15. A correspondence between an information block in the first group control information and a carrier of a terminal device and a process in which the first terminal device determines, based on the first identification information and the third identifier, a position of the information block in which the first control information of the first carrier of the first terminal device is located are described in detail.

As shown in FIG. 15, the first group control information includes 10 blocks (a block 0 to a block 9), a bit map includes 20 bits, and one block in the first group control information schedules first control information of one carrier of one terminal device. For example, the block 0 schedules a carrier 0 (carrier 0) of the first terminal device, a block 1 schedules a carrier 1 (carrier 1) of a second terminal device, and a block 2 schedules a carrier 2 (carrier 2) of a third terminal device. For another example, the block 0 schedules a carrier 0 (carrier 0) of the first terminal device, a block 1 schedules a carrier 1 (carrier 1) of the first terminal device, and a block 2 schedules a carrier 2 (carrier 2) of the first terminal device. It should be understood that a case of a carrier that is of a terminal device and that is scheduled by an information block is not limited to the case shown in FIG. 15. For example, the block 0 may schedule a carrier 0 of the first terminal device, a block 1 may schedule a carrier 2 of the first terminal device, and a block 2 may schedule a carrier 1 of the second terminal device. For another example, the block 0 may schedule a carrier 1 of the first terminal device, a block 1 may schedule a carrier 0 of a third terminal device, and a block 2 may schedule a carrier 1 of a second terminal device. This is not limited in this application. It should be further understood that a carrier that is of a terminal device and that is scheduled by the first group control information is a carrier that is of the terminal device and that corresponds to a position at which a bit value is 1 in the bit map. For example, in the first group control information shown in FIG. 15, identifiers of carriers that are of terminal devices and that correspond to the bit map are 0 to 19, but identifiers of actually scheduled carriers of terminal devices are 1, 2, 5, 6, 8, 9, 10, 11, 13, and 15. First control information of the carrier whose identifier is 1 and that is of a terminal device is information indicated by the block 0, first control information of the carrier whose identifier is 2 and that is of a terminal device is information indicated by the block 1, and so on.

In this manner, one piece of group control information may include scheduling information of a plurality of carriers of one terminal device, and control information of different carriers corresponds to different information blocks. One terminal device may have different terminal identifiers for different carriers. That is, one terminal device may correspond to a plurality of terminal identifiers. For example, the first carrier of the first terminal device corresponds to the third identifier, and a second carrier of the first terminal corresponds to the third identifier. Optionally, the method may include step S3: The network device sends third configuration information, and correspondingly, the first terminal device receives the third configuration information. The third configuration information indicates information about a position of an information block corresponding to a first terminal device group in the information blocks of the first group control information. The first terminal device group includes at least one terminal device, and the first terminal device belongs to the first terminal device group.

Optionally, the third configuration information may be transmitted by using higher layer signaling (for example, RRC signaling). This is not limited in this application.

It should be understood that the information about the position of the information block may include at least one of the following: an identifier of the information block, a start bit position of the information block, and a bit length of the information block.

For example, the information about the position of the information block includes the identifier of the information block. The first terminal device may determine the position of the information block of the first terminal device based on the identifier of the information block. In this manner, the bit length of the information block may be predefined in a protocol, may be notified by the network device to the first terminal device by using signaling, or may be determined by the first terminal device based on a preset rule. The start bit position of the information block may be determined based on the identifier of the information block. The first terminal device determines a bit position of the first control information of the first terminal device in the first group control information based on the identifier of the information block.

For example, the information about the position of the information block includes the start bit position of the information block and the bit length of the information block. The first terminal device may determine the bit position of the first control information of the first terminal device in the first group control information based on the start bit position of the information block and the bit length of the information block.

For example, the information about the position of the information block includes the start bit position of the information block. The first terminal device may determine the position of the information block of the first terminal device based on the start bit position of the information block. In this manner, the bit length of the information block may be predefined in a protocol, may be notified by the network device to the first terminal device by using signaling, or may be determined by the first terminal device based on a preset rule. The first terminal device determines the bit position of the first control information of the first terminal device in the first group control information based on the start bit position of the information block and the bit length of the information block.

For example, the information about the position of the information block includes the bit length of the information block. The first terminal device may determine the position of the information block of the first terminal device based on the bit length of the information block. In this manner, the start bit position of the information block may be predefined in a protocol, may be notified by the network device to the first terminal device by using signaling, or may be determined by the first terminal device based on a preset rule. The first terminal device determines the bit position of the first control information of the first terminal device in the first group control information based on the start bit position of the information block and the bit length of the information block.

For example, the information about the position of the information block includes the identifier of the information block and the bit length of the information block. The first terminal device may determine the position of the information block of the first terminal device based on the identifier of the information block and the bit length of the information block. In this manner, the start bit position of the information block may be predefined in a protocol, may be notified by the network device to the first terminal device by using signaling, or may be determined by the first terminal device based on a preset rule. The first terminal device determines the bit position of the first control information of the first terminal device in the first group control information based on the identifier of the information block and the bit length of the information block.

For example, the information about the position of the information block includes the identifier of the information block, the start bit position of the information block, and the bit length of the information block. The first terminal device may determine the position of the information block of the first terminal device based on the identifier of the information block, the start bit position of the information block, and the bit length of the information block. The first terminal device determines the bit position of the first control information of the first terminal device in the first group control information based on the identifier of the information block, the start bit position of the information block, and the bit length of the information block.

An example in which the information about the position of the information block is the identifier of the information block is used for description below.

Optionally, the network device configures, by using higher layer signaling (for example, RRC signaling), an identifier of the information block that is of the first control information of the first carrier of the first terminal device and that corresponds to the first carrier of the first terminal device in the first group control information, and the third identifier that is of the first control information of the first carrier of the first terminal device and that corresponds to the first carrier of the first terminal device in the first group control information. To be specific, the network device notifies, by using the higher layer signaling, the position of the information block corresponding to the first carrier of the first terminal device, and the second configuration information is transmitted by using the higher layer signaling. Then, the first terminal device determines, based on the first identification information and the third identifier, whether the information block corresponding to the first carrier of the first terminal device schedules the first carrier of the first terminal device. It should be understood that the information block corresponding to the first carrier of the first terminal device may schedule a carrier in a group of carriers, and the group of carriers is a group of carriers of the terminal device. In other words, the information block corresponding to the first carrier of the first terminal device is also an information block corresponding to a group of carriers of the group of terminal devices (or an information block corresponding to the group of terminal devices, or an information block corresponding to the group of carriers). A specifically scheduled carrier is determined by using the first identification information and the third identifier. In other words, whether the information block corresponding to the group of carriers of the group of terminal devices schedules the first carrier of the first terminal device may be determined by using the first identification information and the third identifier.

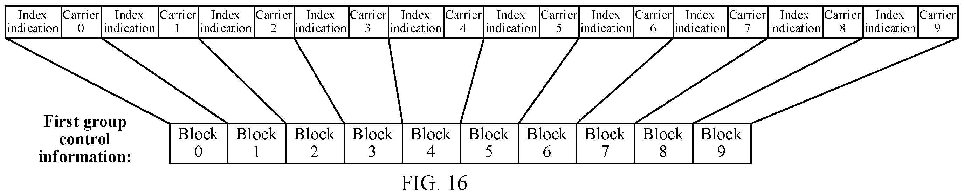

For example, in the following, when the first identification information is in at least one of P₁ information blocks (that is, the case shown in FIG. 10), a total quantity of information blocks in the first group control information is 10, and first identification information included in the 10 information blocks is an indication of an index. Refer to FIG. 16. A correspondence between an information block in the first group control information and a carrier of a terminal device and a process in which the first terminal device determines, based on the first identification information and the third identifier, whether the first terminal device schedules the first carrier of the first terminal device in the corresponding information block are described in detail.

As shown in FIG. 16, the first group control information includes 10 blocks. Each block includes first identification information (for example, an indication of an index) and first control information of a carrier that is of a terminal device, that is actually scheduled, and that corresponds to the first identification information. For example, a block 0 includes the first control information of the first carrier of the first terminal device. It should be understood that one information block of the first group control information may correspond to four carriers that can be scheduled (for example, the first carrier to a fourth carrier of the first terminal device; or the first carrier of the first terminal device, a second carrier of a second terminal device, a third carrier of a third terminal device, and a fourth carrier of a fourth terminal device; or the first carrier to a third carrier of the first terminal device, and a fourth carrier of a second terminal device). That is, the four carriers (the first carrier to the fourth carrier) may belong to a same terminal device or different terminal devices.

Optionally, the first identification information in the first group control information in FIG. 16 may be a bit value, and the indication of the index may be a bit value. That is, for example, when a quantity of bits is 2, the bit value may be 00, 01, 10, or 11. It is assumed that the identifier of the first carrier is 0 (that is, the third identifier is 0), an identifier of the second carrier is 1, an identifier of the third carrier is 2, and an identifier of the fourth carrier is 3. In this case, the first terminal device may determine, based on that the bit value in the first identification information is 00, that the information block schedules the first carrier of the first terminal device.

Optionally, the first identification information in the first group control information in FIG. 16 may be a bit map, that is, the indication of the index may be a bit map. For example, the bit map includes four bits, and one bit corresponds to one carrier. It is assumed that the identifier of the first carrier is 0 (that is, the third identifier is 0) and corresponds to the 1^{st} bit; an identifier of the second carrier is 1 and corresponds to the 2^{nd} bit; an identifier of the third carrier is 2 and corresponds to the 3^{rd} bit; and an identifier of the fourth carrier is 3 and corresponds to the 4^{th} bit. In this case, the first terminal device may determine, based on whether the 1^{st} bit in the first identification information is 1, whether the information block schedules the first carrier of the first terminal device. For example, if the value of the 1^{st} bit is 1, it indicates that the first carrier of the first terminal device is scheduled. If the value of the 1^{st} bit is 0, it indicates that the first carrier of the first terminal device is not scheduled, vice versa. This is not limited in this application. Optionally, the method may further include step S4: The first terminal device estimates the first channel based on the first control information. Specifically, in this embodiment of this application, when the first control information is DCI for channel estimation, the first terminal device estimates a PDSCH based on the DCI for channel estimation.

The following embodiment provides a control information determining method. The method may be used as an independent embodiment, or may be combined with another embodiment of the present invention. Specifically, this is not limited in this application.

An embodiment of the present invention provides a method for switching between single control information and group control information. At least one of the following implementations may be used.

In a possible implementation, first group control information may include indication information, and the indication information indicates that a first group of terminal devices is group control information. It should be understood that, in this possible implementation, after receiving control information, a first terminal device cannot determine whether the control information is group control information or single control information. Therefore, the control information may include an indicator field. The indicator field includes indication information. The indication information indicates that the control information is the group control information or the single control information.

In another possible implementation, a network device may send higher layer signaling, where the higher layer signaling indicates that the control information is the group control information or the single control information. Correspondingly, the first terminal device receives the higher layer signaling. It should be understood that the higher layer signaling may be radio resource control (radio resource control, RRC) signaling, or may be signaling of another type. This is not limited in this application.

The terminal device may detect, at a moment by using the foregoing higher layer signaling, only one type of control information, for example, the single control information or the group control information. The single control information and the group control information have different quantities of bits and different RNTIs (radio network temporary identifiers) for performing CRC scrambling, and configuration may be separately performed. The terminal device performs blind detection only in one case, so that blind detection complexity of the terminal device can be reduced, a latency is reduced, and communication performance is improved.

In this method, a manner of transmitting the group control information and a manner of transmitting the single control information can be semi-statically switched, to satisfy a service requirement and improve the communication performance.

It should be understood that the network device sends the higher layer signaling indicating that the control information is the group control information or the single control information. Indication content of the higher layer signaling may be a transmission manner of the control information at a moment or in a time unit, or may be a transmission manner of the control information within a time period. This is not limited in this application.

Therefore, in the foregoing manner, after receiving the control information, the first terminal device may determine, based on the indication information or the higher layer signaling, whether the control information is the group control information or the single control information, so that the terminal device can perform blind detection only in one case. Therefore, the blind detection complexity of the terminal device can be reduced, the latency is reduced, and the communication performance is improved.

In another possible implementation, the network device may send control information. The control information includes single/group control information indication information. The indication information is information indicating that the control information is the group control information or the single control information.

For example, the network device indicates, by using higher layer signaling, that a transmission mode of the control information of the terminal device is a transmission mode of the group control information. If a small quantity of users are scheduled at a moment, the network device may dynamically switch between a transmission manner of the single control information and the transmission manner of the group control information. It should be understood that the higher layer signaling may be radio resource control (radio resource control, RRC) signaling, or may be signaling of another type. This is not limited in this application.

For example, the transmission manner of the control information is indicated in the control information. The terminal device may determine, by receiving the information, whether the current control information is the single control information or the group control information. Optionally, in this manner, the terminal device may perform DCI blind detection by using one RNTI, for example, a group RNTI. A quantity of bits of the group control information may be the same as a quantity of bits of the single control information, so that a quantity of times for which the UE performs blind detection can be reduced.

Optionally, the control information may include information indicating an identifier of the terminal device, to avoid incorrect decoding of another terminal device.

Optionally, a quantity of bits of the single control information may be the same as a quantity of bits of the group control information. For example, when the quantity of bits of the single control information is less than the quantity of bits of the group control information, zero may be filled in the single control information (for example, zero is filled in a more significant bit or a less significant bit). For another example, when the quantity of bits of the single control information is greater than the quantity of bits of the group control information, a quantity of bits of each information field may be limited, to ensure that a quantity of bits actually transmitted by using the single control information is equal to the quantity of bits of the group control information.

It should be understood that the network device or the terminal device may determine a limited information field and a limited quantity of bits based on a priority of the information field. A definition of the priority may be a predefined priority, for example, priorities are in descending order. Alternatively, the network device may determine a priority and send the priority to the terminal device by using signaling.

It should be further understood that, when the quantity of bits is limited, it may be specified that a bit in an information field is removed. Optionally, a threshold of a maximum quantity of bits that can be removed from an information field may be specified. Optionally, when all bits of an information field are removed, it may be specified that a default value, for example, the 1^{st} value, of the information field is used. To be specific, after receiving the control information, when determining that no bit is transmitted in an information field in the control information, the terminal device determines to use a default value corresponding to the information field.

Therefore, the quantity of bits of the single control information is set to be the same as the quantity of bits of the group control information, so that the terminal device can perform blind detection calculation based on only one quantity of bits. Therefore, the quantity of times for which the terminal device performs blind detection can be reduced.

Optionally, the terminal device may decode a single/group control information indicator field in the control information, to determine whether the control information is the single control information or the group control information, and further determine a meaning of an information field corresponding to each bit.

When the transmission mode is that of the single control information, the control information includes each information field of the terminal device. For example, no additional control information needs to be transmitted. To be specific, the network device transmits the control information only once, and does not need to transmit second control information and/or third control information.

When the transmission mode is the group control information, the control information may include information blocks blocks of a plurality of terminal devices, and the first terminal device needs to determine a block block corresponding to the first terminal device and each field in the block. In addition, different information fields are transmitted by using a plurality of pieces of control information. For example, in addition to transmitting the first control information to the terminal device, the network device further transmits the second control information and/or the third control information to the terminal device.

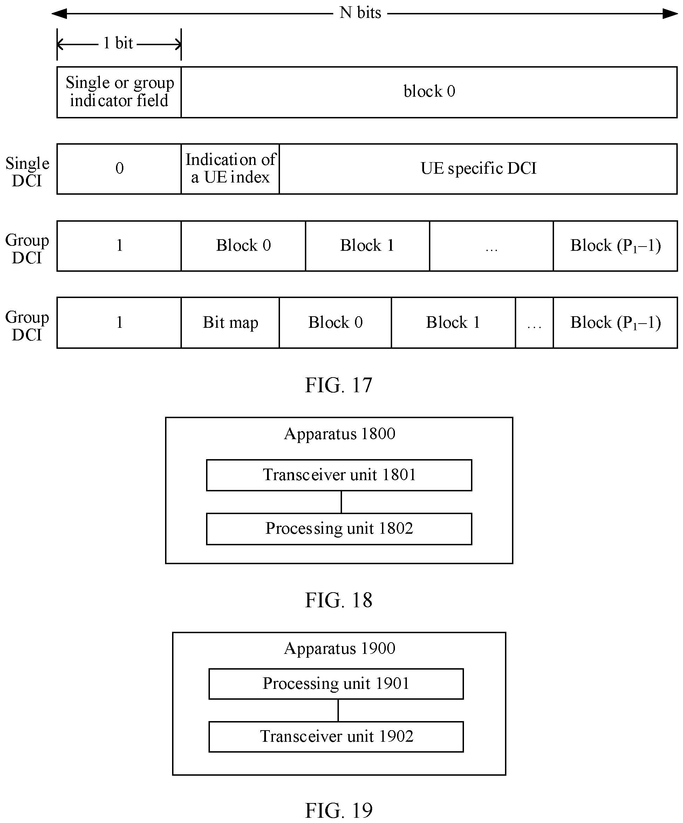

For example, the control information is DCI. FIG. 17 is a schematic diagram of an example structure of an information field included in single control information and group control information. As shown in FIG. 17, the control information includes a 1-bit single or group indicator field, and the single or group indicator field indicates that the current control information is the group control information or the single control information. For example, 0 represents the single control information, 1 represents the group control information, and vice versa. When the control information is the single control information, the control information may include terminal device identification information and scheduling information of a terminal device corresponding to the terminal device identification information. When the control information is the group control information, the control information may include a plurality of information blocks or fields of the group control information in the foregoing embodiment.

S603: The network device sends second control information, where the second control information is for determining information for sending feedback information corresponding to the first channel. Correspondingly, the first terminal device receives the second control information, where the second control information is used by the first terminal device to determine the information for sending the feedback information corresponding to the first channel.

Optionally, the second control information is information for sending uplink control information UCI, and the first channel is a PDSCH. In this case, the second control information may be used by the first terminal device to determine a time-frequency resource, a transmit power, or the like for sending feedback information corresponding to the PDSCH. For example, the second control information includes at least one of the following: indication information of a physical uplink control channel PUCCH resource, transmit power command information, channel state information CSI request information, sounding reference signal SRS request information, and coding block group configuration information.

It should be understood that, before sending the first group control information and the second control information, the second communication apparatus determines the first group control information and the second control information.

It should be further understood that, when both the first control information and the second control information are DCI, the first control information is carried on a PDCCH, and the second control information may be carried on the PDCCH, or may be carried on a PDSCH.

Specifically, in this embodiment of this application, the first terminal device may receive the second control information on the PDSCH. In a possible implementation, the first terminal device receives the second control information on a PDSCH on a primary carrier or a carrier with a smallest carrier identifier.

Therefore, the first group control information includes the first control information for channel estimation, and the second control information is for determining the information for sending the feedback information corresponding to the channel, so that different types of control information are separately transmitted. Therefore, the terminal device can process different types of information in parallel, so that a communication latency can be reduced, and the communication performance is improved.

Optionally, the method 600 may include step S5: The first terminal device determines the feedback information corresponding to the first channel, and sends the feedback information based on the second control information. Correspondingly, the network device receives the feedback information. Specifically, in this embodiment of this application, when the first channel is a PDSCH and the feedback information is UCI, after determining the UCI, the first terminal device sends the UCI to the network device based on the time-frequency resource, the transmit power, or the like in the second control information.

In the foregoing, a plurality of pieces of control information are simultaneously transmitted by using the group control information, and the control information is transmitted in types or in parts, so that one piece of group control information includes one CRC bit, and the terminal device can simultaneously process different types of control information. Therefore, spectral efficiency of transmitting the control information can be improved, a processing latency of the terminal device is reduced, and a communication latency and reliability are improved.

In this embodiment of this application, the method 600 may further include step S604.

S604: The network device sends third group control information. The third group control information includes P₂ information blocks. P₂ is an integer greater than or equal to 1, and the P₂ information blocks include third control information of the first terminal device. The third control information is for decoding the first channel. Correspondingly, the first terminal device receives the third group control information.

It should be understood that, similar to the first group control information, the third group control information belongs to other group control information, and the third group control information includes a plurality of pieces of third control information. Optionally, the third control information is control information for decoding the first channel. For example, the third control information is DCI for decoding a PDSCH, that is, the first channel is a PDSCH.

It should be further understood that the third control information may include at least one of the following: modulation and coding scheme MCS information, HARQ process number information, redundancy version information, and new data indicator information.

Therefore, because the third group control information includes control information of a type different from that of the first control information and the second control information, parallel processing of the terminal device can be implemented, and the communication latency is reduced. Optionally, there is a correspondence between a position of the first control information of the first terminal device in the first group control information and a position of the third control information of the terminal device in the third group control information. For example, the position of the first control information of the first terminal device in the first group control information is the same as the position of the third control information of the terminal device in the third group control information.

Therefore, a structure of the first group control information and a structure of the third group control information are associated, so that blind detection complexity of the terminal device can be reduced, the latency is reduced, and the communication performance is improved.

In a possible implementation, the first terminal device receives the third group control information, and the method 600 further includes step S605.

S605: The first terminal device determines, based on the first identification information in the first group control information, the information block that corresponds to the first terminal device and that is in the third group control information.

Specifically, in this embodiment of this application, when a position of the first control information corresponding to the carrier that is of the terminal device and that is scheduled by the first group control information is the same as a position of the third control information corresponding to the carrier that is of the terminal device and that is scheduled by the third control information, the first terminal device may determine, based on the first identification information included in the first group control information, the information block corresponding to the first terminal device. In this case, optionally, the third group control information may not include identification information. Therefore, the first terminal device determines the corresponding information block in the third group control information based on the first identification information in the first group control information, so that an operation on a side of the first terminal device is faster. In addition, when the third group control information does not include the identification information, a quantity of bits included in the third group control information is reduced, thereby saving a resource and improving communication efficiency.

In a possible implementation, the quantity of bits of the third group control information is determined based on the first identification information included in the first group control information. Specifically, in this embodiment of this application, when 10 terminal devices are actually scheduled or 10 carriers are actually scheduled in the first group control information, the first identification information includes a corresponding indication, so that the quantity of bits of the third group control information may be determined based on the quantity 10 of terminal devices or carriers that is indicated by the first identification information, or a quantity of information blocks of the third group control information is determined based on the quantity indicated by the first identification information.

The quantity of bits of the third group control information is determined based on the first identification information included in the first group control information, so that the quantity of bits of the third group control information can be determined based on a status of actually scheduled control information. In comparison with that the quantity of bits of the third group control information is a predefined value or a fixed value indicated by signaling, resource overheads of the third group control information can be reduced, and the communication efficiency and the communication performance are improved.

Optionally, there is a correspondence between a control channel element CCE number of a CCE corresponding to the first group control information and a control channel element CCE number of a CCE corresponding to the third group control information, and/or a CCE aggregation level corresponding to the first group control information is the same as a CCE aggregation level corresponding to the third group control information.

Optionally, when the CCE number of the CCE corresponding to the first group control information is x1_{cce}, the CCE number of the CCE corresponding to the third group control information may be x2_{cce}, where x2_{cce}=f(x1_{cce}). f() is an operation, for example, may be a linear operation or a nonlinear operation.

For example, when the CCE number of the CCE corresponding to the first group control information is 1 to 4, the CCE number of the CCE corresponding to the third group control information is 5 to 8.

Optionally, the CCE aggregation level of the CCE corresponding to the first group control information is the same as the CCE aggregation level of the CCE corresponding to the third group control information. When the CCE aggregation level corresponding to the first group control information is L₁, the CCE aggregation level corresponding to the third group control information is L₂, where L₁=L₂. For example, the CCE aggregation levels are both 4 or 8. This is not limited in this application.

Therefore, the CCE of the first group control information is associated with the CCE of the third group control information, so that blind detection complexity of the terminal device can be reduced, the latency is reduced, and the communication performance is improved.

In addition, it should be understood that, in this embodiment of this application, a plurality of pieces of control information are transmitted by using the group control information, and the group control information may occupy a plurality of CCEs, that is, occupy a large quantity of time-frequency resources. Therefore, when a low bit rate is used for transmission, robustness and reliability of information transmission can be improved.

FIG. 18 is a schematic diagram of a possible structure of an apparatus according to an embodiment of this application. An apparatus 1800 may implement a function of the first terminal device in the embodiment of the method 600, and therefore can also implement beneficial effects of the embodiment of the method 600. In this embodiment of this application, the apparatus may be a device of a terminal type shown in FIG. 1 to FIG. 4, or may be a module (for example, a chip) used in a first terminal device.

As shown in FIG. 18, the apparatus 1800 includes a transceiver unit 1801 and a processing unit 1802. The apparatus 1800 may be configured to implement a function of the first terminal device in the method embodiment shown in FIG. 5.

Specifically, the transceiver unit 1801 is configured to receive first group control information. The first group control information includes P₁ information blocks, and P₁ is an integer greater than or equal to 1. The processing unit 1802 is configured to determine, based on first identification information in the first group control information, an information block corresponding to the first terminal device. The information block corresponding to the first terminal device is L information blocks in the P₁ information blocks. L is an integer greater than or equal to 1, and L is less than or equal to P1. The information block corresponding to the first terminal device includes first control information of the first terminal device. The first control information is used by the first terminal device to perform channel estimation on a first channel. The transceiver unit 1801 is further configured to receive second control information. The second control information is used by the first terminal device to determine information for sending feedback information corresponding to the first channel.

For more detailed descriptions of the transceiver unit 1801 and the processing unit 1802, refer to related descriptions in the foregoing method embodiments. Details are not described herein again. A hardware element of the transceiver unit 1801 may be a transceiver, and a hardware element of the processing unit 1802 may be a processor.

FIG. 19 is a schematic diagram of a possible structure of an apparatus according to an embodiment of this application. An apparatus 1900 may implement a function of the network device in the embodiment of the method 600, and therefore can also implement beneficial effects of the embodiment of the method 600. In this embodiment of this application, the apparatus may be the network device shown in FIG. 1 to FIG. 4, or may be a module (for example, a chip) used in the network device.

As shown in FIG. 19, the apparatus 1900 includes a processing unit 1901 and a transceiver unit 1902. The apparatus 1900 may be configured to implement a function of the network device in the method embodiment shown in FIG. 6.

Specifically, the processing unit 1901 is configured to determine first group control information and second control information. The transceiver unit 1902 is configured to send the first group control information. The first group control information includes P₁ information blocks, and P₁ is an integer greater than or equal to 1. The first group control information includes first identification information. The first identification information is for determining an information block corresponding to one or more terminal devices. An information block corresponding to a first terminal device in the one or more terminal devices is L information blocks in the P₁ information blocks. L is an integer greater than or equal to 1, and L is less than or equal to P₁. The information block corresponding to the first terminal device includes first control information of the first terminal device. The first control information is for channel estimation on a first channel of the first terminal device. The transceiver unit 1902 is further configured to send the second control information. The second control information is for determining information for sending feedback information corresponding to the first channel.

For more detailed descriptions of the processing unit 1901 and the transceiver unit 1902, refer to related descriptions in the foregoing method embodiments. Details are not described herein again. A hardware element of the processing unit 1901 may be a processor, and a hardware element of the transceiver unit 1902 may be a transceiver.

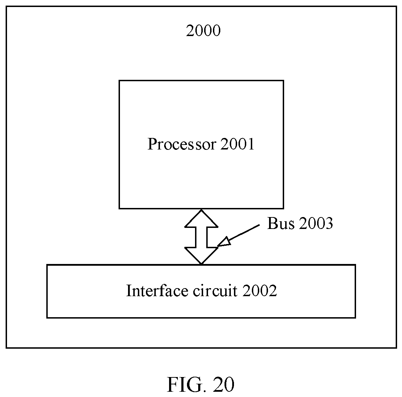

FIG. 20 is a schematic diagram of a possible structure of a communication apparatus according to an embodiment of this application. A communication apparatus 2000 includes a processor 2001 and an interface circuit 2002. The processor 2001 and the interface circuit 2002 may be connected by using a bus 2003. It may be understood that the interface circuit 2002 is a transceiver or an input/output interface. Optionally, the communication apparatus 2000 may further include a memory, configured to store instructions executed by the processor 2001, or store input data required by the processor 2001 to run the instructions, or store data generated after the processor 2001 runs the instructions.

When the communication apparatus 2000 is configured to implement the method in the foregoing method embodiments, the processor 2001 is configured to perform a function of the foregoing processing unit, and the interface circuit 2002 is configured to perform a function of the foregoing transceiver unit. For example, when the communication apparatus 2000 is configured to implement the method on a side of the first terminal device in the foregoing method embodiments, the interface circuit 2002 is configured to receive first group control information. The first group control information includes P₁ information blocks, and P₁ is an integer greater than or equal to 1.

The processor 2001 is configured to determine, based on first identification information in the first group control information, an information block corresponding to a first communication apparatus. The information block corresponding to the first communication apparatus is L information blocks in the P₁ information blocks. L is an integer greater than or equal to 1, and L is less than or equal to P₁. The information block corresponding to the first communication apparatus includes first control information of the first communication apparatus. The first control information is used by the first communication apparatus to perform channel estimation on a first channel. The interface circuit 2002 is further configured to receive second control information. The second control information is used by the first communication apparatus to determine information for sending feedback information corresponding to the first channel. For another example, when the communication apparatus 2000 is configured to implement the method on a side of the network device in the foregoing method embodiments, the processor 2001 is configured to determine first group control information and second control information. The interface circuit 2002 is configured to output the first group control information. The first group control information includes P₁ information blocks, and P₁ is an integer greater than or equal to 1. The first group control information includes first identification information. The first identification information is for determining an information block corresponding to one or more terminal devices. An information block corresponding to a first communication apparatus in the one or more terminal devices is L information blocks in the P₁ information blocks. L is an integer greater than or equal to 1, and L is less than or equal to P₁. The information block corresponding to the first communication apparatus includes first control information of the first communication apparatus. The first control information is for channel estimation on a first channel of the first communication apparatus. The interface circuit 2002 is further configured to output the second control information. The second control information is for determining information for sending feedback information corresponding to the first channel.

When the communication apparatus 2000 is a chip used in a terminal device, the chip of the terminal device implements a function of the first terminal device in the foregoing method embodiments. The chip of the terminal device receives information from another module (for example, a radio frequency module or an antenna) in the terminal device, where the information is sent by a network device to the terminal device. Alternatively, the chip of the terminal device sends information to another module (for example, a radio frequency module or an antenna) in the terminal device, where the information is sent by the terminal device to a network device.

When the communication apparatus 2000 is a chip used in a network device, the chip of the terminal device implements a function of the network device in the foregoing method embodiments. The chip of the network device receives information from another module (for example, a radio frequency module or an antenna) in the network device, where the information is sent by a terminal device to the network device. Alternatively, the chip of the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

In embodiments of this application, the terminal device or the network device may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

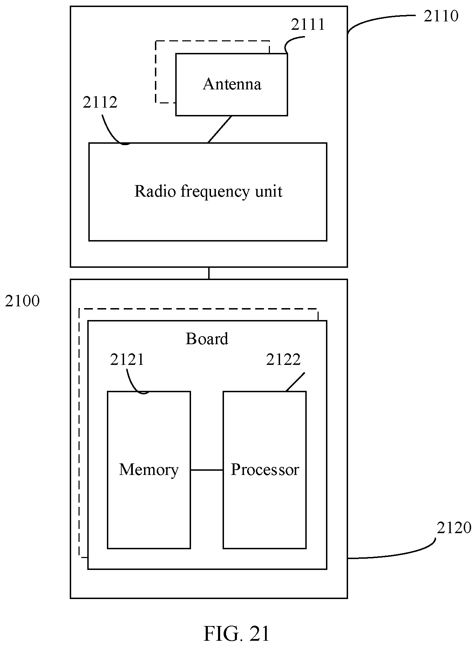

FIG. 21 is a schematic diagram of a structure of a network device according to an embodiment of this application, for example, a schematic diagram of a structure of a base station. The base station 2100 may be used in the system shown in FIG. 1, and performs a function of the network device in the foregoing method embodiments. As shown in the figure, the base station 2100 may include at least one antenna 2111 and at least one radio frequency unit 2112. Optionally, the transceiver unit 2110 may include a receiving unit and a sending unit. The receiving unit may correspond to a receiver (or referred to as a receiving machine or a receiving circuit), and the sending unit may correspond to a transmitter (or referred to as a transmitting machine or a transmitting circuit).

It should be understood that the base station 2100 shown in FIG. 21 can implement processes of the network device in the foregoing method embodiments and operations or functions of modules of the network device, and is separately used to implement corresponding procedures in the foregoing method embodiments. For details, refer to the descriptions in the foregoing method embodiments. To avoid repetition, detailed descriptions are properly omitted herein.

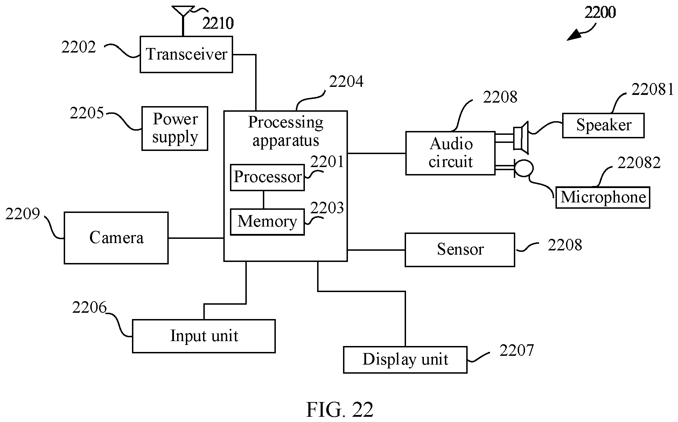

FIG. 22 is a schematic diagram of a structure of a terminal device 2200 according to an embodiment of this application. As shown in the figure, the terminal device 2200 includes a processor 2201 and a transceiver 2202. Optionally, the terminal device 2200 may further include a memory 2203. The processor 2201, the transceiver 2202, and the memory 2203 may communicate with each other via an internal connection path, to transfer a control signal and/or a data signal. The memory 2203 is configured to store a computer program. The processor 2201 is configured to invoke the computer program from the memory 2203 and run the computer program, to control the transceiver 2202 to receive/send a signal.

The processor 2201 and the memory 2203 may be integrated into one processing apparatus 2204. The processor 2201 is configured to execute program code stored in the memory 2203 to implement the foregoing functions. It should be understood that the processing apparatus 2204 shown in the figure is merely an example. During specific implementation, the memory 2203 may alternatively be integrated into the processor 2201, or may be independent of the processor 2201. This is not limited in this application.

The terminal device 2200 may further include an antenna 2210, configured to send, by using a radio signal, uplink data or uplink control signaling output by the transceiver 2202.

It should be understood that, the terminal device 2200 shown in FIG. 22 can implement each process related to the terminal device in the foregoing method embodiments. Operations or functions of modules in the terminal device 2200 are respectively intended to implement corresponding procedures in the foregoing method embodiments. For details, refer to the descriptions in the foregoing method embodiments. To avoid repetition, detailed descriptions are properly omitted herein.

Optionally, the terminal device 2200 may further include a power supply 2205, configured to supply power to various components or circuits in the terminal device.

In addition, optionally, to improve functions of the terminal device, the terminal device 2200 may further include one or more of an input unit 2206, a display unit 2207, an audio circuit 2208, a camera 2209, a sensor 2208, and the like. The audio circuit may further include a speaker 22081, a microphone 22082, and the like.

In a possible implementation, the processor and the memory are separated, and the processor, an output interface, an input interface, and the like constitute a processing apparatus.

It should be understood that the processing apparatus may be a chip. For example, the processing apparatus may be a field programmable gate array (field programmable gate array, FPGA), may be a general-purpose processor, a digital signal processor (digital signal processor, DSP), an application specific integrated circuit (application-specific integrated circuit, ASIC), the field programmable gate array (field programmable gate array, FPGA), another programmable logic device, a discrete gate, a transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware processor, or may be performed by using a combination of hardware in the processor and a software module. A software module may be in a mature storage medium in the art, such as a random access memory, a flash memory, a read-only memory, a programmable read-only memory, an electrically erasable programmable memory, or a register. The storage medium is in the memory, and a processor reads information in the memory and completes the steps in the foregoing methods in combination with hardware of the processor.

The memory 2203 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that the memory of the systems and methods described in this specification includes but is not limited to these and any memory of another proper type.

This application further provides a computer program product. The computer program product includes computer program code. When the computer program code is run on a computer, the method in any one of the foregoing method embodiments is performed.

This application further provides a computer-readable medium. The computer-readable medium stores program code. When the program code is run on a computer, the method in the foregoing method embodiment is performed.

This application further provides a computer program. When the computer program is run on a computer, the method performed by the network device or the terminal device in the foregoing method embodiments is performed.

This application further provides a system, including at least one terminal device and at least one network device.

In addition, aspects or features of this application may be implemented as a method, an apparatus, or a product that uses standard programming and/or engineering technologies. The term "product" used in this application covers a computer program that can be accessed from any computer-readable component, carrier or medium. In addition, various storage media described in this specification may represent one or more devices and/or other machine-readable media that are configured to store information. The term "computer readable medium" may include but is not limited to various other media that can store, include, and/or carry instructions and/or data.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD), or a compact disc (compact disc, CD)), a semiconductor medium (for example, a solid-state drive (solid-state drive, SSD)), a smart card and a flash memory component (for example, an erasable programmable read-only memory (erasable programmable read-only memory, EPROM), a card, a stick, or a key driver), or the like.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

Terminologies such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, or a computer. As illustrated by using figures, both a computing device and an application that runs on the computing device may be components. One or more components may reside within a process or an execution thread, and a component may be located on one computer or distributed between two or more computers. In addition, these components may be executed from various computer-readable media that store various data structures. For example, the components may communicate by using a local or remote process based on a signal having one or more data packets (for example, data from two components interacting with another component in a local system, in a distributed system, or across a network such as the Internet interacting with another system by using the signal).

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It should be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more.

It should be further understood that, in embodiments of this application, "B corresponding to A" represents that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that, in embodiments of this application, the terminal device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily to be performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control information transmission method, comprising:
receiving, by a first communication apparatus, first group control information, wherein the first group control information comprises P₁ information blocks, and P₁ is an integer greater than or equal to 1;
determining, by the first communication apparatus based on first identification information in the first group control information, an information block corresponding to the first communication apparatus, wherein
the information block corresponding to the first communication apparatus is L information blocks in the P₁ information blocks, L is an integer greater than or equal to 1, L is less than or equal to P₁, the information block corresponding to the first communication apparatus comprises first control information of the first communication apparatus, and the first control information is used by the first communication apparatus to perform channel estimation on a first channel; and
receiving, by the first communication apparatus, second control information, wherein the second control information is used by the first communication apparatus to determine information for sending feedback information corresponding to the first channel.

2. The method according to claim 1, wherein the method further comprises:
receiving, by the first communication apparatus, third group control information, wherein the third group control information comprises P₂ information blocks, P₂ is an integer greater than or equal to 1, the P₂ information blocks comprise third control information of the first communication apparatus, and the third control information is used by the first communication apparatus to decode the first channel.

3. The method according to claim 1 or 2, wherein L=1, the L information blocks comprise M₁ pieces of control information, the M₁ pieces of control information are control information of M₁ carriers of the first communication apparatus, and M₁ is an integer greater than or equal to 1.

4. The method according to claim 3, wherein the first identification information indicates one or more terminal devices scheduled by the first group control information.

5. The method according to claim 3 or 4, wherein the method further comprises:
receiving, by the first communication apparatus, first configuration information, wherein the first configuration information comprises a second identifier corresponding to the first communication apparatus; and
determining, by the first communication apparatus based on the first identification information and the second identifier, the information block corresponding to the first communication apparatus.

6. The method according to any one of claims 3 to 5, wherein the information block corresponding to the first communication apparatus comprises carrier identifier indication information, the carrier identifier indication information indicates the M₁ carriers in N carriers of the first communication apparatus, and N is an integer greater than or equal to M₁.

7. The method according to claim 1 or 2, wherein L=M₂, the M₂ information blocks are information blocks corresponding to M₂ carriers of the first communication apparatus, M₂ is an integer greater than or equal to 1, and M₂ is less than or equal to P₁.

8. The method according to claim 7, wherein the first identification information indicates one or more carriers scheduled by the first group control information, and the one or more carriers correspond to a same terminal device or different terminal devices.

9. The method according to claim 7 or 8, wherein the method further comprises:
receiving, by the first communication apparatus, second configuration information, wherein the second configuration information comprises a third identifier corresponding to a first carrier of the first communication apparatus; and
determining, by the first communication apparatus based on the first identification information and the third identifier, an information block corresponding to the first carrier of the first communication apparatus.

10. The method according to any one of claims 1 to 9, wherein the first identification information is before the P₁ information blocks, or the first identification information is in at least one of the P₁ information blocks.

11. The method according to any one of claims 2 to 10, wherein there is a correspondence between a position of the first control information of the first communication apparatus in the first group control information and a position of the third control information of the first communication apparatus in the third group control information.

12. The method according to any one of claims 2 to 11, wherein the method further comprises:
determining, by the first communication apparatus based on the first identification information in the first group control information, the information block that corresponds to the first communication apparatus and that is in the third group control information.

13. The method according to any one of claims 1 to 12, wherein when the first identification information is in at least one of the P₁ information blocks, the method further comprises:
receiving, by the first communication apparatus, third configuration information, wherein the third configuration information indicates information about a position of an information block corresponding to a first communication apparatus group in the information blocks of the first group control information, the first communication apparatus group comprises at least one terminal device, and the first communication apparatus belongs to the first communication apparatus group.

14. The method according to claim 13, wherein the information about the position of the information block comprises at least one of the following: an identifier of the information block, a start bit position of the information block, and a bit length of the information block.

15. The method according to any one of claims 1 to 14, wherein the first group control information further comprises indication information, and the indication information indicates that the first group control information is group control information.

16. The method according to any one of claims 1 to 15, wherein the first control information comprises at least one of the following: time domain resource allocation information, frequency domain resource allocation information, antenna port information, layer quantity information, and information about a sequence of a demodulation reference signal.

17. The method according to any one of claims 1 to 16, wherein the second control information comprises at least one of the following: indication information of a physical uplink control channel PUCCH resource, transmit power command information, channel state information CSI request information, sounding reference signal SRS request information, and coding block group configuration information.

18. The method according to any one of claims 1 to 17, wherein the receiving, by the first communication apparatus, second control information comprises:
receiving, by the first communication apparatus, the second control information on a physical downlink shared channel PDSCH.

19. The method according to any one of claims 2 to 18, wherein the third control information comprises at least one of the following: modulation and coding scheme MCS information, HARQ process number information, redundancy version information, and new data indicator information.

20. The method according to any one of claims 2 to 19, wherein a quantity of bits of the third group control information is determined based on the first identification information comprised in the first group control information.

21. The method according to any one of claims 2 to 20, wherein there is a correspondence between a control channel element CCE number of a CCE corresponding to the first group control information and a control channel element CCE number of a CCE corresponding to the third group control information, and/or a CCE aggregation level corresponding to the first group control information is the same as a CCE aggregation level corresponding to the third group control information.

22. A control information transmission method, comprising:
determining, by a second communication apparatus, first group control information and second control information;
sending, by the second communication apparatus, the first group control information, wherein the first group control information comprises P₁ information blocks, and P₁ is an integer greater than or equal to 1, wherein
the first group control information comprises first identification information, the first identification information is for determining an information block corresponding to one or more terminal devices, an information block corresponding to a first communication apparatus in the one or more terminal devices is L information blocks in the P₁ information blocks, L is an integer greater than or equal to 1, L is less than or equal to P₁, the information block corresponding to the first communication apparatus comprises first control information of the first communication apparatus, and the first control information is for channel estimation on a first channel of the first communication apparatus; and
sending, by the second communication apparatus, the second control information, wherein the second control information is for determining information about feedback information corresponding to the first channel.

23. The method according to claim 22, wherein the method further comprises:
sending, by the second communication apparatus, third group control information, wherein the third group control information comprises P₂ information blocks, P₂ is an integer greater than or equal to 1, the P₂ information blocks comprise third control information of the first communication apparatus, and the third control information is for decoding the first channel.

24. The method according to claim 22 or 23, wherein L=1, the L information blocks comprise M₁ pieces of control information, the M₁ pieces of control information are control information of M₁ carriers of the first communication apparatus, and M₁ is an integer greater than or equal to 1.

25. The method according to claim 24, wherein the first identification information indicates the one or more terminal devices scheduled by the first group control information.

26. The method according to claim 24 or 25, wherein the method further comprises:
sending, by the second communication apparatus, first configuration information, wherein the first configuration information comprises a second identifier corresponding to the first communication apparatus, and the second identifier is for determining the information block corresponding to the first communication apparatus.

27. The method according to any one of claims 24 to 26, wherein the information block corresponding to the first communication apparatus comprises carrier identifier indication information, the carrier identifier indication information indicates the M₁ carriers in N carriers of the first communication apparatus, and N is an integer greater than or equal to M₁.

28. The method according to claim 22 or 23, wherein L=M₂, the information block corresponding to the first communication apparatus is M₂ information blocks, the M₂ information blocks are information blocks corresponding to M₂ carriers of the first communication apparatus, M₂ is an integer greater than or equal to 1, and M₂ is less than or equal to P₁.

29. The method according to claim 28, wherein the first identification information indicates one or more carriers scheduled by the first group control information, and the one or more carriers correspond to a same terminal device or different terminal devices.

30. The method according to claim 28 or 29, wherein the method further comprises:
sending, by the second communication apparatus, second configuration information, wherein the second configuration information comprises a third identifier corresponding to a first carrier of the first communication apparatus, and the third identifier is for determining an information block corresponding to the first carrier of the first communication apparatus.

31. The method according to any one of claims 22 to 30, wherein the first identification information is before the P₁ information blocks, or the first identification information is in at least one of the P₁ information blocks.

32. The method according to any one of claims 22 to 31, wherein the method further comprises:
receiving, by the second communication apparatus, the feedback information corresponding to the first channel.

33. The method according to any one of claims 23 to 32, wherein there is a correspondence between a position of the first control information of the first communication apparatus in the first group control information and a position of the third control information of the first communication apparatus in the third group control information.

34. The method according to any one of claims 22 to 33, wherein when the first identification information is in at least one of the P₁ information blocks, the method further comprises:
sending, by the second communication apparatus, third configuration information, wherein the third configuration information indicates information about a position of an information block corresponding to a first communication apparatus group in the information blocks of the first group control information, the first communication apparatus group comprises at least one terminal device, and the first communication apparatus belongs to the first communication apparatus group.

35. The method according to claim 34, wherein the information about the position of the information block comprises at least one of the following: an identifier of the information block, a start bit position of the information block, and a bit length of the information block.

36. The method according to any one of claims 22 to 35, wherein the first group control information further comprises indication information, and the indication information indicates that the first group control information is group control information.

37. The method according to any one of claims 22 to 36, wherein the first control information comprises at least one of the following: time domain resource allocation information, frequency domain resource allocation information, antenna port information, layer quantity information, and information about a sequence of a demodulation reference signal.

38. The method according to any one of claims 22 to 37, wherein the second control information comprises at least one of the following: indication information of a physical uplink control channel PUCCH resource, transmit power command information, channel state information CSI request information, sounding reference signal SRS request information, and coding block group configuration information.

39. The method according to any one of claims 22 to 38, wherein the sending, by the second communication apparatus, the second control information comprises:
sending, by the second communication apparatus, the second control information on a physical downlink shared channel PDSCH on a primary carrier of the first communication apparatus or a carrier with a smallest carrier identifier.

40. The method according to any one of claims 23 to 39, wherein the third control information comprises at least one of the following: modulation and coding scheme MCS information, HARQ process number information, redundancy version information, and new data indicator information.

41. The method according to any one of claims 23 to 40, wherein a quantity of bits of the third group control information is determined based on the first identification information comprised in the first group control information.

42. The method according to any one of claims 23 to 41, wherein there is a correspondence between a control channel element CCE number of a CCE corresponding to the first group control information and a control channel element CCE number of a CCE corresponding to the third group control information, and/or a CCE aggregation level corresponding to the first group control information is the same as a CCE aggregation level corresponding to the third group control information.

43. A control information transmission apparatus, wherein the apparatus comprises a transceiver unit and a processing unit, the transceiver unit is configured to receive first group control information, the first group control information comprises P₁ information blocks, and P₁ is an integer greater than or equal to 1;
the processing unit is configured to determine, based on first identification information in the first group control information, an information block corresponding to the first communication apparatus, wherein
the information block corresponding to the first communication apparatus is L information blocks in the P₁ information blocks, L is an integer greater than or equal to 1, L is less than or equal to P₁, the information block corresponding to the first communication apparatus comprises first control information of the first communication apparatus, and the first control information is used by the first communication apparatus to perform channel estimation on a first channel; and
the transceiver unit is further configured to receive second control information, wherein the second control information is used by the first communication apparatus to determine information for sending feedback information corresponding to the first channel.

44. The apparatus according to claim 43, wherein the transceiver unit is further configured to:
receive third group control information, wherein the third group control information comprises P₂ information blocks, P₂ is an integer greater than or equal to 1, the P₂ information blocks comprise third control information of the first communication apparatus, and the third control information is used by the first communication apparatus to decode the first channel.

45. The apparatus according to claim 43 or 44, wherein L=1, the L information blocks comprise M₁ pieces of control information, the M₁ pieces of control information are control information of M₁ carriers of the first communication apparatus, and M₁ is an integer greater than or equal to 1.

46. The apparatus according to claim 45, wherein the first identification information indicates one or more terminal devices scheduled by the first group control information.

47. The apparatus according to claim 45 or 46, wherein the transceiver unit is further configured to receive first configuration information, wherein the first configuration information comprises a second identifier corresponding to the first communication apparatus; and
the processing unit is further configured to determine, based on the first identification information and the second identifier, the information block corresponding to the first communication apparatus.

48. The apparatus according to any one of claims 45 to 47, wherein the information block corresponding to the first communication apparatus comprises carrier identifier indication information, the carrier identifier indication information indicates the M₁ carriers in N carriers of the first communication apparatus, and N is an integer greater than or equal to M₁.

49. The apparatus according to claim 43 or 44, wherein L=M₂, the M₂ information blocks are information blocks corresponding to M₂ carriers of the first communication apparatus, M₂ is an integer greater than or equal to 1, and M₂ is less than or equal to P₁.

50. The apparatus according to claim 49, wherein the first identification information indicates one or more carriers scheduled by the first group control information, and the one or more carriers correspond to a same terminal device or different terminal devices.

51. The apparatus according to claim 49 or 50, wherein the transceiver unit is further configured to receive second configuration information, wherein the second configuration information comprises a third identifier corresponding to a first carrier of the first communication apparatus; and
the processing unit is further configured to determine, based on the first identification information and the third identifier, an information block corresponding to the first carrier of the first communication apparatus.

52. The apparatus according to any one of claims 43 to 51, wherein the first identification information is before the P₁ information blocks, or the first identification information is in at least one of the P₁ information blocks.

53. The apparatus according to any one of claims 44 to 52, wherein there is a correspondence between a position of the first control information of the first communication apparatus in the first group control information and a position of the third control information of the first communication apparatus in the third group control information.

54. The apparatus according to any one of claims 44 to 53, wherein the processing unit is further configured to determine, based on the first identification information in the first group control information, the information block that corresponds to the first communication apparatus and that is in the third group control information.

55. The apparatus according to any one of claims 43 to 54, wherein when the first identification information is in at least one of the P₁ information blocks, the transceiver unit is further configured to receive third configuration information, wherein the third configuration information indicates information about a position of an information block corresponding to a first communication apparatus group in the information blocks of the first group control information, the first communication apparatus group comprises at least one terminal device, and the first communication apparatus belongs to the first communication apparatus group.

56. The apparatus according to claim 55, wherein the information about the position of the information block comprises at least one of the following: an identifier of the information block, a start bit position of the information block, and a bit length of the information block.

57. The apparatus according to any one of claims 43 to 56, wherein the first group control information further comprises indication information, and the indication information indicates that the first group control information is group control information.

58. The apparatus according to any one of claims 43 to 57, wherein the first control information comprises at least one of the following: time domain resource allocation information, frequency domain resource allocation information, antenna port information, layer quantity information, and information about a sequence of a demodulation reference signal.

59. The apparatus according to any one of claims 43 to 58, wherein the second control information comprises at least one of the following: indication information of a physical uplink control channel PUCCH resource, transmit power command information, channel state information CSI request information, sounding reference signal SRS request information, and coding block group configuration information.

60. The apparatus according to any one of claims 43 to 59, wherein that the transceiver unit is configured to receive second control information comprises:
the transceiver unit is configured to receive the second control information on a physical downlink shared channel PDSCH.

61. The apparatus according to any one of claims 44 to 60, wherein the third control information comprises at least one of the following: modulation and coding scheme MCS information, HARQ process number information, redundancy version information, and new data indicator information.

62. The apparatus according to any one of claims 44 to 61, wherein a quantity of bits of the third group control information is determined based on the first identification information comprised in the first group control information.

63. The apparatus according to any one of claims 44 to 62, wherein there is a correspondence between a control channel element CCE number of a CCE corresponding to the first group control information and a control channel element CCE number of a CCE corresponding to the third group control information, and/or a CCE aggregation level corresponding to the first group control information is the same as a CCE aggregation level corresponding to the third group control information.

64. A control information transmission apparatus, wherein the apparatus comprises a processing unit and a transceiver unit, and the processing unit is configured to determine first group control information and second control information;
the transceiver unit is configured to send the first group control information, wherein the first group control information comprises P₁ information blocks, and P₁ is an integer greater than or equal to 1, wherein
the first group control information comprises first identification information, the first identification information is for determining an information block corresponding to one or more terminal devices, an information block corresponding to a first communication apparatus in the one or more terminal devices is L information blocks in the P₁ information blocks, L is an integer greater than or equal to 1, L is less than or equal to P₁, the information block corresponding to the first communication apparatus comprises first control information of the first communication apparatus, and the first control information is for channel estimation on a first channel of the first communication apparatus; and
the transceiver unit is further configured to send the second control information, wherein the second control information is for determining information for sending feedback information corresponding to the first channel.

65. The apparatus according to claim 64, wherein the transceiver unit is further configured to send third group control information, wherein the third group control information comprises P₂ information blocks, P₂ is an integer greater than or equal to 1, the P₂ information blocks comprise third control information of the first communication apparatus, and the third control information is for decoding the first channel.

66. The apparatus according to claim 64 or 65, wherein L=1, the L information blocks comprise M₁ pieces of control information, the M₁ pieces of control information are control information of M₁ carriers of the first communication apparatus, and M₁ is an integer greater than or equal to 1.

67. The apparatus according to claim 66, wherein the first identification information indicates the one or more terminal devices scheduled by the first group control information.

68. The apparatus according to claim 66 or 67, wherein the transceiver unit is further configured to send first configuration information, wherein the first configuration information comprises a second identifier corresponding to the first communication apparatus, and the second identifier is for determining the information block corresponding to the first communication apparatus.

69. The apparatus according to any one of claims 66 to 68, wherein the information block corresponding to the first communication apparatus comprises carrier identifier indication information, the carrier identifier indication information indicates the M₁ carriers in N carriers of the first communication apparatus, and N is an integer greater than or equal to M₁.

70. The apparatus according to claim 64 or 65, wherein L=M₂, the information block corresponding to the first communication apparatus is M₂ information blocks, the M₂ information blocks are information blocks corresponding to M₂ carriers of the first communication apparatus, M₂ is an integer greater than or equal to 1, and M₂ is less than or equal to P₁.

71. The apparatus according to claim 70, wherein the first identification information indicates one or more carriers scheduled by the first group control information, and the one or more carriers correspond to a same terminal device or different terminal devices.

72. The apparatus according to claim 70 or 71, wherein the transceiver unit is further configured to send second configuration information, wherein the second configuration information comprises a third identifier corresponding to a first carrier of the first communication apparatus, and the third identifier is for determining an information block corresponding to the first carrier of the first communication apparatus.

73. The apparatus according to any one of claims 64 to 72, wherein the first identification information is before the P₁ information blocks, or the first identification information is in at least one of the P₁ information blocks.

74. The apparatus according to any one of claims 64 to 73, wherein the transceiver unit is further configured to receive the feedback information corresponding to the first channel.

75. The apparatus according to any one of claims 65 to 74, wherein there is a correspondence between a position of the first control information of the first communication apparatus in the first group control information and a position of the third control information of the first communication apparatus in the third group control information.

76. The apparatus according to any one of claims 64 to 75, wherein when the first identification information is in at least one of the P₁ information blocks, the transceiver unit is further configured to:
send third configuration information, wherein the third configuration information indicates information about a position of an information block corresponding to a first communication apparatus group in the information blocks of the first group control information, the first communication apparatus group comprises at least one terminal device, and the first communication apparatus belongs to the first communication apparatus group.

77. The apparatus according to claim 76, wherein the information about the position of the information block comprises at least one of the following: an identifier of the information block, a start bit position of the information block, and a bit length of the information block.

78. The apparatus according to any one of claims 64 to 77, wherein the first group control information further comprises indication information, and the indication information indicates that the first group control information is group control information.

79. The apparatus according to any one of claims 64 to 78, wherein the first control information comprises at least one of the following: time domain resource allocation information, frequency domain resource allocation information, antenna port information, layer quantity information, and information about a sequence of a demodulation reference signal.

80. The apparatus according to any one of claims 64 to 79, wherein the second control information comprises at least one of the following: indication information of a physical uplink control channel PUCCH resource, transmit power command information, channel state information CSI request information, sounding reference signal SRS request information, and coding block group configuration information.

81. The apparatus according to any one of claims 64 to 80, wherein that the transceiver unit is configured to send the second control information comprises:
the transceiver unit sends the second control information on a physical downlink shared channel PDSCH on a primary carrier of the first communication apparatus or a carrier with a smallest carrier identifier.

82. The apparatus according to any one of claims 65 to 81, wherein the third control information comprises at least one of the following: modulation and coding scheme MCS information, HARQ process number information, redundancy version information, and new data indicator information.

83. The apparatus according to any one of claims 65 to 82, wherein a quantity of bits of the third group control information is determined based on the first identification information comprised in the first group control information.

84. The apparatus according to any one of claims 65 to 83, wherein there is a correspondence between a control channel element CCE number of a CCE corresponding to the first group control information and a control channel element CCE number of a CCE corresponding to the third group control information, and/or a CCE aggregation level corresponding to the first group control information is the same as a CCE aggregation level corresponding to the third group control information.

85. A chip system, comprising a memory and a processor, wherein the memory is configured to store program instructions and/or data, and the processor is configured to execute the program instructions and/or the data, to perform the method according to any one of claims 1 to 21 or claims 22 to 42.

86. A computer-readable storage medium, comprising a program or instructions, wherein when the program or the instructions are run on a computer, the method according to any one of claims 1 to 21 or claims 22 to 42 is performed.

87. A communication apparatus, comprising a processor, wherein the processor is coupled to a memory, the memory is configured to store a computer program or instructions, and the processor is configured to execute the computer program or the instructions in the memory, to perform the method according to any one of claims 1 to 21 or claims 22 to 42.

88. A computer program product, wherein when the computer program product runs on a computer, the method according to any one of claims 1 to 21 or claims 22 to 42 is performed.
